(19) Europäisches Patentamt

European Patent Office

Office européen des brevets

(11) **EP 2 930 685 A2**

(12) **EUROPEAN PATENT APPLICATION**

(43) Date of publication:
**14.10.2015 Bulletin 2015/42**

(51) Int Cl.:
***G06T 3/00*** *(2006.01)*

(21) Application number: **15162659.5**

(22) Date of filing: **07.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **07.04.2014 KR 20140041390**

(71) Applicant: **LG Electronics Inc.**
**Yeongdeungpo-gu**
**Seoul 150-721 (KR)**

(72) Inventor: **Kang, Kyungjin**
**137-893 Seoul (KR)**

(74) Representative: **Ter Meer Steinmeister & Partner Patentanwälte mbB**
**Nymphenburger Straße 4**
**80335 München (DE)**

(54) **PROVIDING A CURVED EFFECT TO A DISPLAYED IMAGE**

(57)    An image display apparatus and an operation method thereof are disclosed. The image display apparatus includes a nonlinear scaling controller to output a nonlinear scaling factor corresponding to a user's viewing angle in a curved display mode, an image processing unit to perform nonlinear scaling for a received image using the nonlinear scaling factor, and a display to display the nonlinearly scaled image. Consequently, it is possible to provide a curved effect to an image displayed on the display.

FIG.21

## Description

This application claims the priority benefit of Korean Patent Appl. No. 10-2014-0041390, filed on April 7, 2014.

### 1. Field of the invention

The present invention relates to an image display apparatus and an operation method thereof and, more particularly, to an image display apparatus that is capable of providing a curved effect to an image displayed thereon and an operation method thereof.

### 2. Description of the Related Art

An image display device has a function to display an image viewable by a user. The user may view a broadcast through the image display device. The image display device displays a broadcast, which is selected by the user from among broadcast signals transmitted from a broadcasting station, on a display. Currently, broadcasting is transitioning from analog broadcasting to digital broadcasting around the world.
Digital broadcasting refers to broadcasting to transmit digital video and audio signals. The digital broadcasting exhibits low data loss due to robustness against external noise, excellent error correction, high resolution, and high definition as compared with analog broadcasting. In addition, the digital broadcasting can provide a bidirectional service unlike the analog broadcasting.

### SUMMARY OF THE INVENTION

It is an object of the present invention to provide an image display apparatus that is capable of providing a curved effect to an image displayed thereon and an operation method thereof.
In accordance with an aspect of the present invention, the above and other objects can be accomplished by the provision of an image display apparatus including a nonlinear scaling controller to output a nonlinear scaling factor corresponding to a user's viewing angle in a curved display mode, an image processing unit to perform nonlinear scaling for a received image using the nonlinear scaling factor, and a display to display the nonlinearly scaled image.
In accordance with another aspect of the present invention, there is provided an image display apparatus including an image processing unit to perform nonlinear scaling for a received image based on a vertical conversion ratio and a horizontal conversion ratio for nonlinear scaling in a curved display mode and a display to display the nonlinearly scaled image.
In accordance with a further aspect of the present invention, there is provided an operation method of an image display apparatus including receiving an image, receiving information regarding a user's viewing angle, performing nonlinear scaling for the received image based on the user's viewing angle, and displaying the nonlinearly scaled image.

### BRIEF DESCRIPTION OF THE DRAWINGS

The above and other objects, features and other advantages of the present invention will be more clearly understood from the following detailed description taken in conjunction with the accompanying drawings, in which:

FIG. 1 is a view showing the external appearance of an image display apparatus according to an embodiment of the present invention;
FIG. 2 is an internal block diagram of the image display apparatus according to the embodiment of the present invention;
FIG. 3 is an internal block diagram of a controller of FIG. 2;
FIG. 4 is a view showing a control method of a remote controller of FIG. 2;
FIG. 5 is an internal block diagram of the remote controller of FIG. 2;
FIG. 6 is a view showing a conventional one-dimensional scaler;
FIG. 7 is a view showing relationships between various types of image display apparatuses and a user;
FIG. 8 is a flowchart showing an operation method of the image display apparatus according to an embodiment of the present invention; and
FIGS. 9 to 26 are reference views illustrating the operation method of FIG. 8.

### DETAILED DESCRIPTION OF THE PREFERRED EMBODIMENTS

Reference will now be made in detail to the preferred embodiments of the present invention, examples of which are illustrated in the accompanying drawings.

The terms "module" and "unit," when attached to the names of components are used herein to help the understanding of the components and thus they should not be considered as having specific meanings or roles. Accordingly, the terms "module" and "unit" may be used interchangeably.

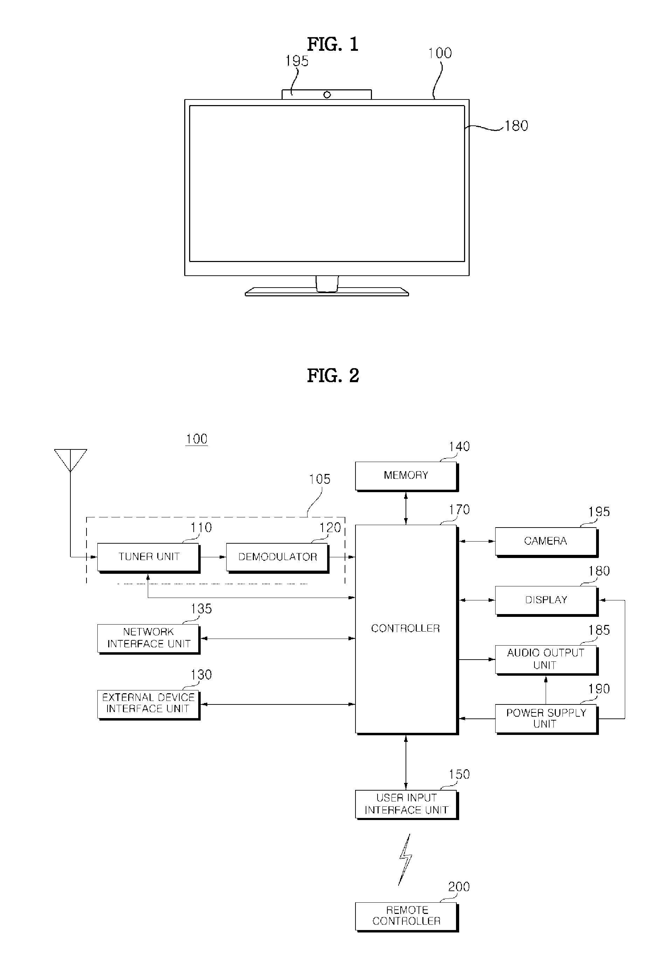

FIG. 1 is a view showing the external appearance of an image display apparatus according to an embodiment of the present invention.

Referring to FIG. 1, the image display apparatus 100 according to the embodiment of the present invention may include a display 180 and a camera unit 195. In this case, the display 180 may be a flat panel display.

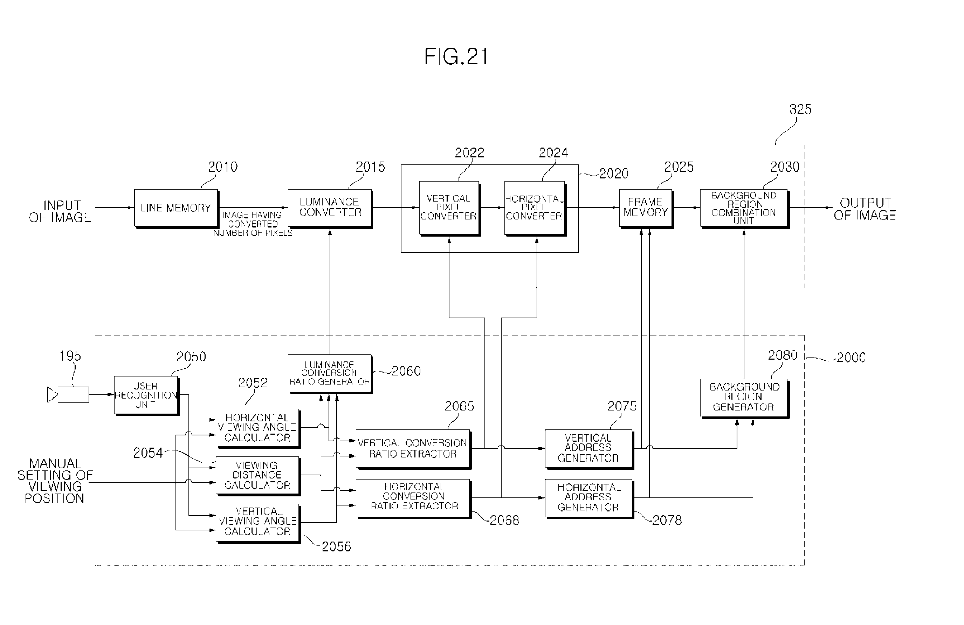

To this end, the image display apparatus 100 may further include a nonlinear scaling controller 2000 (see FIG. 21) to output a nonlinear scaling factor corresponding to a user's viewing angle and an image processing unit 325 (see FIG. 21) to perform nonlinear scaling for a received image using the nonlinear scaling factor in a curved display mode.

The display 180 may display a nonlinearly scaled image. As a result, a curved effect may be provided even on the flat panel display 180.

The image processing unit 325 (see FIG. 21) may nonlinearly change the size or position of pixels in a screen to provide a curved effect during nonlinear scaling.

The nonlinear scaling factor may include a vertical conversion ratio and a horizontal conversion ratio for nonlinear scaling.

The image processing unit 325 (see FIG. 21) may perform nonlinear scaling for pixels arranged in a vertical direction using the vertical conversion ratio. In addition, the image processing unit 325 (see FIG. 21) may perform nonlinear scaling for pixels arranged in a horizontal direction using the horizontal conversion ratio.

The image processing unit 325 (see FIG. 21) may nonlinearly change at least one selected from between the size and position of pixels in an image during nonlinear scaling.

On the other hand, the image processing unit 325 (see FIG. 21) may nonlinearly change luminance of the pixels in the image during nonlinear scaling. As a result, an immersion effect or a cubic effect may be further improved.

In a concave mode of the curved display mode, the image processing unit 325 (see FIG. 21) may control at least one selected from between the size and luminance of the pixels in the image to be increased in proportion to the increase of the user's viewing angle.

In an under-scan mode of the concave mode, the image processing unit 325 (see FIG. 21) may perform nonlinear scaling such that the nonlinearly scaled image includes a concave image region and a non-signal region. In an over-scan mode of the concave mode, on the other hand, the image processing unit 325 (see FIG. 21) may perform nonlinear scaling such that the nonlinearly scaled image includes only a concave image region.

In a convex mode of the curved display mode, the image processing unit 325 (see FIG. 21) may control at least one selected from between the size and luminance of the pixels in the image to be decreased in inverse proportion to the increase of the user's viewing angle.

In an under-scan mode of the convex mode, the image processing unit 325 (see FIG. 21) may perform nonlinear scaling such that the nonlinearly scaled image includes a convex image region and a non-signal region. In an over-scan mode of the convex mode, on the other hand, the image processing unit 325 (see FIG. 21) may perform nonlinear scaling such that the nonlinearly scaled image includes only a convex image region.

As a result, an immersion effect may be provided in the concave mode of the curved display mode and a cubic effect may be provided in the convex mode of the curved display mode. Consequently, it is possible to provide various image viewing effects.

Meanwhile, the nonlinear scaling controller 2000 (see FIG. 21) may output a nonlinear scaling factor corresponding to the user's viewing angle and the distance between the user and the display. In particular, nonlinear scaling may be performed in consideration of even the distance between the user and the display with the result that the user may further feel the curved effect.

The nonlinear scaling controller 2000 (see FIG. 21) may nonlinearly change at least one selected from between the size and position of the pixels in the image. In this case, the nonlinear scaling controller 2000 (see FIG. 21) may control at least one selected from between the size and position of the pixels in the image to be increased in proportion to the increase of the distance between the user and the display.

On the other hand, it is possible to select any one from between the under-scan mode and the over-scan mode of the concave mode or the convex mode based on a user input, thereby improving user convenience.

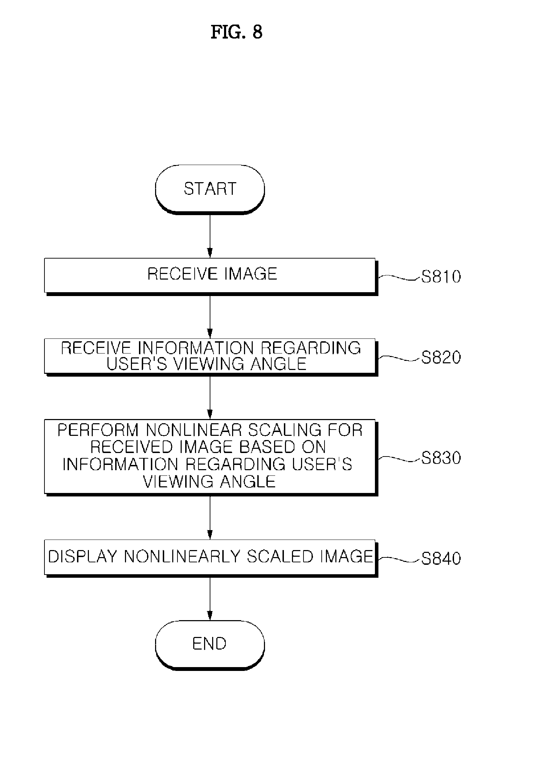

Nonlinear scaling in the curved display mode as described above will hereinafter be described in more detail with reference to FIG. 8 and the following drawings.

FIG. 2 is an internal block diagram of the image display apparatus according to the embodiment of the present invention.

Referring to FIG. 2, the image display apparatus 100 according to the embodiment of the present invention may include a broadcast reception unit 105, an external device interface unit 130, a network interface unit 135, a memory 140, a user input interface unit 150, a sensor unit (not shown), a controller 170, a display 180, and an audio output unit 185.

The broadcast reception unit 105 may include a tuner unit 110 and a demodulator 120. The broadcast reception unit 105 may further include the network interface unit 135. At need, the broadcast reception unit 105 may be designed to include the tuner unit 110 and the demodulator 120 but not to include the network interface unit 135. On the other hand, the broadcast reception unit 105 may be designed to include the network interface unit 135 but not to include the tuner unit 110 and the demodulator 120.

Meanwhile, the broadcast reception unit 105 may further include the external device interface unit 130 unlike the drawing. For example, a broadcast signal from a settop box (not shown) may be received through the external device interface unit 130.

The tuner unit 110 tunes to a radio frequency (RF) broadcast signal corresponding to a channel selected by a user from among RF broadcast signals received by an antenna or all prestored channels. In addition, the tuner unit 110 converts the tuned RF broadcast signal into an intermediate frequency (IF) signal or a baseband video or audio signal.

For example, in a case in which the tuned RF broadcast signal is a digital broadcast signal, the tuner unit 110 converts the tuned RF broadcast signal into a digital IF signal (DIF). On the other hand, in a case in which the tuned RF broadcast signal is an analog broadcast signal, the tuner unit 110 converts the tuned RF broadcast signal into an analog baseband video or audio signal (CVBS/SIF). That is, the tuner unit 110 may process a digital broadcast signal or an analog broadcast signal. The analog baseband video or audio signal (CVBS/SIF) output from the tuner unit 110 may be directly input to the controller 170.

In addition, the tuner unit 110 may sequentially tune to RF broadcast signals of all broadcast channels stored through a channel memory function from among RF broadcast signals received by the antenna and convert the tuned RF broadcast signals into intermediate frequency signals or baseband video or audio signals.

Meanwhile, the tuner unit 110 may include a plurality of tuners to receive broadcast signals of a plurality of channels. Alternatively, the tuner unit 110 may include a single tuner to simultaneously receive broadcast signals of a plurality of channels.

The demodulator 120 receives the digital IF signal (DIF) converted by the tuner unit 110 and performs demodulation.

After performing the demodulation and channel decoding, the demodulator 120 may output a transport stream signal (TS). In this case, the transport stream signal may be a multiplexed video signal, a multiplexed audio signal, or a multiplexed data signal.

The transport stream signal output from the demodulator 120 may be input to the controller 170. The controller 170 performs demultiplexing, video/audio signal processing, etc. Subsequently, the controller 170 outputs a video to the display 180 and outputs an audio to the audio output unit 185.

The external device interface unit 130 may transmit or receive data to or from an external device (not shown) connected to the image display apparatus 100. To this end, the external device interface unit 130 may include an audio/video (A/V) input and output unit (not shown) or a wireless communication unit (not shown).

The external device interface unit 130 may be connected to an external device, such as a digital versatile disc (DVD) player, a Blu-ray player, a game console, a camera, a camcorder, a computer (a laptop computer), or a settop box, in a wired/wireless fashion. In addition, the external device interface unit 130 may perform an input operation to the external device or an output operation from the external device.

The A/V input and output unit may receive a video signal and an audio signal from the external device. Meanwhile, the wireless communication unit may perform a near field communication with another electronic device.

The network interface unit 135 may provide an interface to connect the image display apparatus 100 to a wired/wireless network including the Internet. For example, the network interface unit 135 may receive content or data provided by a content provider or a network operator over a network, such as the Internet.

The memory 140 may store a program to process and control signals in the controller 170. Alternatively, the memory 140 may store a processed video, audio, or data signal.

In addition, the memory 140 may temporarily store a video, audio, or data signal input to the external device interface unit 130. Furthermore, the memory 140 may store information regarding a predetermined broadcast channel using a channel memory function, such as a channel map.

In FIG. 2, the memory 140 is provided separately from the controller 170. However, the present invention is not limited thereto. For example, the memory 140 may be included in the controller 170.

The user input interface unit 150 transfers a signal input by a user to the controller 170 or transfers a signal from the controller 170 to the user.

For example, the user input interface unit 150 may transmit/receive a user input signal, such as power on/off, channel selection, or screen setting, to/from a remote controller 200. The user input interface unit 150 may transfer a user input signal input through a local key (not shown), such as a power key, a channel key, a volume key, or a setting key, to the controller 170. In addition, the user input interface unit 150 may transfer a user input signal input from a sensor unit (not shown) to sense a gesture of a user to the controller 170 or transmit a signal from the controller 170 to the sensor unit (not shown).

The controller 170 may demultiplex a stream input through the tuner unit 110, the demodulator 120, or the external device interface unit 130 or process demultiplexed signals to generate and output a video or audio signal.

The video signal processed by the controller 170 may be input to the display 180, which may display a video corresponding to the video signal. In addition, the video signal processed by the controller 170 may be input to an external output device through the external device interface unit 130.

The audio signal processed by the controller 170 may be output to the audio output unit 185. In addition, the audio signal processed by the controller 170 may be input to the external output device through the external device interface unit 130.

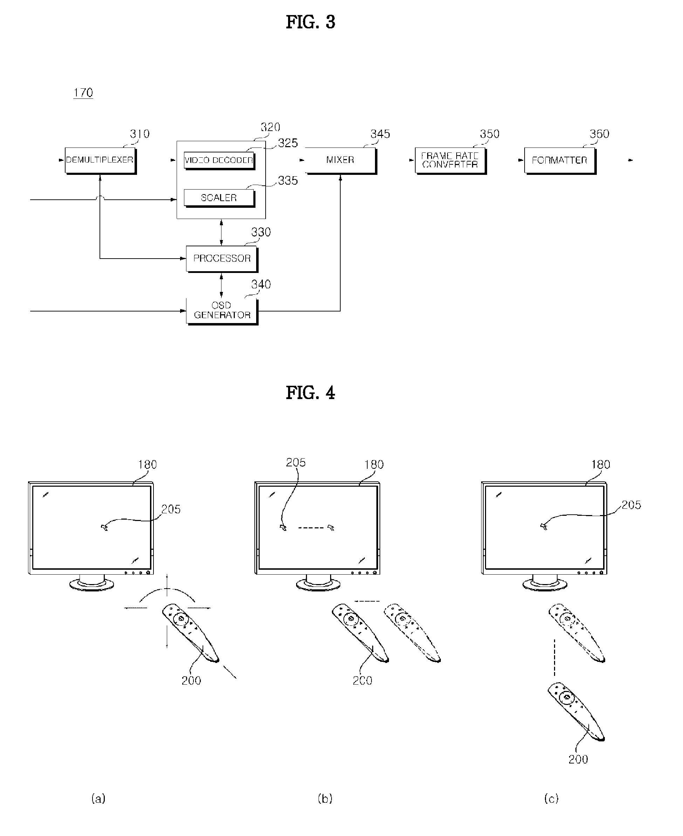

Although not shown in FIG. 2, the controller 170 may include a demultiplexer and an image processing unit, which will hereinafter be described with reference to FIG. 3.

On the other hand, the controller 170 may control overall operation of the image display apparatus 100. For example, the controller 170 may control the tuner unit 110 to tune to a channel selected by a user or an RF broadcast corresponding to a prestored channel.

In addition, the controller 170 may control the image display apparatus 100 based on a user command input through the user input interface unit 150 or an internal program.

On the other hand, the controller 170 may control the display 180 to display an image. In this case, the image displayed on the display 180 may be a still picture or a motion picture. Alternatively, the image displayed on the display 180 may be a two-dimensional (2D) image or a three-dimensional (3D) image.

Meanwhile, the controller 170 may generate and display a 2D object in the image displayed on the display 180 as a 3D object. For example, the object may be at least one selected from among an accessed web page (a newspaper, a magazine, etc.), an electronic program guide (EPG), a variety of menus, a widget, an icon, a still picture, a motion picture, and text.

The 3D object may be processed to have a depth different from the depth of the image displayed on the display 180. For example, the 3D object may be processed to protrude more than the image displayed on the display 180.

Meanwhile, the controller 170 may recognize the location of a user based on an image captured by the camera unit 195. For example, the controller 170 may recognize a distance (z-axis coordinate) between the user and the image display apparatus 100. In addition, the controller 170 may recognize an x-axis coordinate and a y-axis coordinate in the display 180 corresponding to the location of the user.

Meanwhile, although not shown in the drawing, the image display apparatus 100 may further include a channel browsing processing unit to generate a thumbnail image corresponding to a channel signal or an externally input signal. The channel browsing processing unit may receive a transport stream signal (TS) output from the demodulator 120 or a transport stream signal output from the external device interface unit 130 and extract an image from the received transport stream signal to generate a thumbnail image. The generated thumbnail image may be stream-decoded together with the decoded image and then input to the controller 170. The controller 170 may control a thumbnail list including a plurality of thumbnail images to be displayed on the display 180 using the input thumbnail image.

At this time, the thumbnail list may be displayed in a simple view mode in which a portion of the thumbnail list is displayed in a state in which a predetermined image is displayed on the display 180 or in a full view mode in which the thumbnail list is displayed on the most part of the display 180. The thumbnail images of the thumbnail list may be sequentially updated.

The display 180 coverts an image signal, a data signal, an on-screen display (OSD) signal, or a control signal processed by the controller 170 or an image signal, a data signal, or a control signal received from the external device interface unit 130 into a drive signal.

A plasma display panel (PDP), a liquid crystal display (LCD), an organic light emitting diode (OLED) display, or a flexible display may be used as the display 180. In addition, the display 180 may have a 3D display function.

The display 180 may display a 3D image in an additional display mode or in a single display mode such that a user can view the 3D image.

In the single display mode, the display 180 realizes a 3D image without an additional display, such as glasses. For example, the single display mode may include various modes, such as a lenticular mode and a parallax barrier mode.

In the additional display mode, on the other hand, an additional display is used as a viewing apparatus (not shown) in addition to the display 180 in order to realize a 3D image. For example, the additional display mode may include various modes, such as a head mounted display (HMD) mode and a glasses mode.

The glasses mode may be classified into a passive mode, such as a polarized glasses mode, and an active mode, such as a shutter glasses mode. In addition, the head mounted display mode may be classified into a passive mode and an active mode.

Meanwhile, the viewing apparatus (not shown) may be 3D glasses that enable a user to view a stereoscopic image. The 3D glasses may include passive type polarized glasses or active type shutter glasses. The 3D glasses may also include head mounted display type glasses.

On the other hand, a touchscreen may be used as the display 180. In this case, the display 180 may be used as an input device in addition to an output device.

The audio output unit 185 receives an audio signal processed by the controller 170 and outputs the received audio signal in the form of an audible sound.

The camera unit 195 captures an image of a user. The camera unit 195 may include one camera. However, the present invention is not limited thereto. For example, the camera unit 195 may include a plurality of cameras. Meanwhile, the camera unit 195 may be embedded in the image display apparatus 100 at the upper part of the display 180 or disposed separately from the image display apparatus 100. Image information captured by the camera unit 195 may be input to the controller 170.

The controller 170 may sense a gesture of the user by using the image captured by the camera unit 195 and/or the signal sensed by the sensing unit (not shown).

The power supply unit 190 supplies power to the display apparatus 100. Specifically, the power supply unit 190 may supply power to the controller 170, which may be realized in the form of a system on chip (SOC), the display 180 to display a video, and the audio output unit 185 to output an audio.

To this end, the power supply unit 190 may include a converter to convert alternating current power into direct current power and a DC/DC converter to convert the level of the direct current power.

The remote controller 200 transmits a user input to the user input interface unit 150. To this end, the remote controller 200 may use various communication techniques such as Bluetooth communication, radio frequency (RF) communication, infrared (IR) communication, ultra wideband (UWB) communication, and ZigBee communication.

In addition, the remote controller 200 may receive a video, audio, or data signal output from the user input interface unit 150 and display the received signal or output the received signal as a sound.

Meanwhile, the image display apparatus 100 as described above may be a fixed type or mobile type digital broadcast receiver that can receive digital broadcast.

The block diagram of the image display apparatus 100 shown in FIG. 2 is a view illustrating the embodiment of the present invention. The respective components of the block diagram may be combined, added, or omitted according to the specifications of an image display apparatus 100 which is actually embodied. That is, two or more components may be combined into a single component or one component may be divided into two or more components as needed. In addition, the function performed by each block is intended for description of the embodiment of the invention and actions or components of each block does not limit the scope of the invention.

On the other hand, the image display apparatus 100 may not include the tuner unit 110 and the demodulator 120 shown in FIG. 2 and may receive and reproduce image content through the network interface unit 135 or the external device interface unit 130.

Meanwhile, the image display apparatus 100 is an example of an image signal processing apparatus that processes an image stored in the apparatus or an input image. A settop box excluding the display 180 and the audio output unit 185 shown in FIG. 2, a DVD player, a Blu-ray player, a game console, and a computer may be used as other examples of the image signal processing apparatus.

FIG. 3 is an internal block diagram of the controller of FIG. 2.

Referring to FIG. 3, the controller 170 according to the embodiment of the present invention may include a demultiplexer 310, a video processing unit 320, a processor 330, an OSD generator 340, a mixer 345, a frame rate converter 350, and a formatter 360. In addition, the controller 170 may further include an audio processing unit (not shown) and a data processing unit (not shown).

The demultiplexer 310 demultiplexes an input stream. For example, in a case in which an MPEG-2 TS is input, the demultiplexer 310 may demultiplex the MPEG-2 TS into video, audio, and data signals. The transport stream signal input to the demultiplexer 310 may be a transport stream signal output from the tuner unit 110, the demodulator 120, or the external device interface unit 130.

The video processing unit 320 may process a demultiplexed video signal. To this end, the video processing unit 320 may include a video decoder 325 and a scaler 335.

The video decoder 325 decodes the demultiplexed video signal and the scaler 335 scales the resolution of the decoded video signal such that the video signal can be output to the display 180.

Decoders based on various standards may be used as the video decoder 325.

Meanwhile, the video signal decoded by the video processing unit 320 may be classified as a 2D video signal, a 3D video signal, or a combination of the 2D video signal and the 3D video signal.

For example, an external video signal input from an external device (not shown) or a video component of a broadcast signal received by the tuner unit 110 may be classified as a 2D video signal, a 3D video signal, or a combination of the 2D video signal and the 3D video signal. Consequently, the external video signal input from the external device (not shown) or the video component of the broadcast signal received by the tuner unit 110 may be processed by the controller 170, specifically the video processing unit 320 such that the external video signal input from the external device (not shown) or the video component of the broadcast signal received by the tuner unit 110 can be output as a 2D video signal, a 3D video signal, or a combination of the 2D video signal and the 3D video signal.

On the other hand, the video signal decoded by the video processing unit 320 may be one of 3D video signals based on various formats. For example, the video signal decoded by the video processing unit 320 may be a 3D video signal including a color image and a depth image. Alternatively, the video signal decoded by the video processing unit 320 may be a 3D video signal including a multi-view video signal. For example, the multi-view video signal may include a left-eye video signal and a right-eye video signal.

The formats of the 3D video signal may include a side by side format at which the left-eye video signal L and the right-eye video signal R are arranged side by side, a top and bottom format at which the left-eye video signal L and the right-eye video signal R are arranged at top and bottom, a frame sequential format at which the left-eye video signal L and the right-eye video signal R are arranged by time division, an interlaced format at which the left-eye video signal L and the right-eye video signal R are mixed per line, and a checker box format at which the left-eye video signal L and the right-eye video signal R are mixed per box.

The processor 330 may control overall operation of the image display apparatus 100 or the controller 170. For example, the processor 330 may control the tuner unit 110 to tune to a channel selected by a user or an RF broadcast corresponding to a prestored channel.

In addition, the processor 330 may control the image display apparatus 100 based on a user command input through the user input interface unit 150 or an internal program.

Furthermore, the processor 330 may control transmission of data to the network interface unit 135 or the external device interface unit 130.

In addition, the processor 330 may control operations of the demultiplexer 310, the video processing unit 320, and the OSD generator 340 of the controller 170.

The OSD generator 340 generates an OSD signal according to a user input or autonomously. For example, the OSD generator 340 may generate a signal to display various kinds of information on the screen of the display 180 in the form of graphics or text based on a user input signal. The generated OSD signal may include various data, such as a user interface screen, various menu screens, a widget, and an icon, of the image display apparatus 100. In addition, the generated OSD signal may include a 2D object or a 3D object.

In addition, the OSD generator 340 may generate a pointer that can be displayed on the display based on a pointing signal input from the remote controller 200. In particular, the pointer may be generated by a pointing signal processing unit (not shown). The OSD generator 340 may include such a pointing signal processing unit (not shown). Of course, the pointing signal processing unit (not shown) may not be provided in the OSD generator 340 but may be provided separately from the OSD generator 340.

The mixer 345 may mix the OSD signal generated by the OSD generator 340 with the decoded video signal processed by the video processing unit 320. At this time, the OSD signal and the decoded video signal may each include at least one selected from between a 2D signal and a 3D signal. The mixed video signal is provided to the frame rate converter 350.

The frame rate converter 350 may convert the frame rate of an input video. On the other hand, the frame rate converter 350 may directly output an input video without converting the frame rate of the input video.

The formatter 360 may arrange left-eye video frames and right-eye video frames of the 3D video, the frame rate of which has been converted. In addition, the formatter 360 may output a synchronization signal Vsync to open a left-eye glasses part and a right-eye glasses part of a 3D viewing apparatus (not shown).

Meanwhile, the formatter 360 may receive the signal mixed by the mixer 345, i.e. the OSD signal and the decoded video signal, and separate the signal into a 2D video signal and a 3D video signal.

In addition, the formatter 360 may change the format of a 3D video signal. For example, the formatter 360 may change the format of the 3D video signal into any one of the formats as previously described.

On the other hand, the formatter 360 may convert a 2D video signal into a 3D video signal. For example, the formatter 360 may detect an edge or a selectable object from a 2D video signal, separate an object based on the detected edge or the selectable object from the 2D video signal, and generate a 3D video signal based on the separated object according to a 3D video generation algorithm. At this time, the generated 3D video signal may be separated into a left-eye video signal L and a right-eye video signal R, which may be arranged, as previously described.

Meanwhile, although not shown in the drawing, a 3D processor (not shown) for 3D effect signal processing may be further disposed at the rear of the formatter 360. The 3D processor (not shown) may control brightness, tint, and color of a video signal to improve a 3D effect. For example, the 3D processor (not shown) may perform signal processing such that a short distance is vivid while a long distance is blurred. Meanwhile, the function of the 3D processor may be incorporated in the formatter 360 or the video processing unit 320

Meanwhile, the audio processing unit (not shown) of the controller 170 may process a demultiplexed audio signal. To this end, the audio processing unit (not shown) may include various decoders.

In addition, the audio processing unit (not shown) of the controller 170 may adjust bass, treble, and volume of the audio signal.

The data processing unit (not shown) of the controller 170 may process a demultiplexed data signal. For example, in a case in which the demultiplexed data signal is an encoded data signal, the data processing unit may decode the demultiplexed data signal. The encoded data signal may be electronic program guide (EPG) information containing broadcast information, such as start time and end time, of a broadcast program provided by each channel.

In FIG. 3, the signals from the OSD generator 340 and the video processing unit 320 are mixed by the mixer 345 and then 3D processing is performed by the formatter 360. However, the present invention is not limited thereto. For example, the mixer may be disposed at the rear of the formatter. That is, the formatter 360 may 3D process output of the video processing unit 320, the OSD generator 340 may perform 3D processing together with OSD generation, and the mixer 345 may mix the 3D signals processed by the formatter 360 and the OSD generator 340.

Meanwhile, the block diagram of the controller 170 shown in FIG. 3 is a view showing the embodiment of the present invention. The respective components of the block diagram may be combined, added, or omitted according to the specifications of a controller 170 which is actually embodied.

In particular, the frame rate converter 350 and the formatter 360 may not be provided in the controller 170 but may be provided separately from the controller 170 as one module.

FIG. 4 is a view showing a control method of the remote controller of FIG. 2.

As shown in FIG. 4(a), a pointer 205 corresponding to the remote controller 200 is displayed on the display 180.

A user may move or rotate the remote controller 200 up and down, side to side (FIG. 4(b)), and back and forth (FIG. 4(c)). The pointer 205 displayed on the display 180 of the image display apparatus corresponds to motion of the remote controller 200. Since the pointer 205 corresponding to the remote controller 200 is moved and displayed according to motion in a 3D space as shown in the drawings, the remote controller 200 may be referred to as a spatial remote controller or a 3D pointing apparatus.

FIG. 4(b) illustrates a case in which, when the user moves the remote controller 200 to the left, the pointer 205 moves to the left on the display 180 of the image display apparatus.

Information regarding motion of the remote controller 200 sensed by a sensor of the remote controller is transmitted to the image display apparatus. The image display apparatus may calculate the coordinates of the pointer 205 from the information regarding the motion of the remote controller 200. The image display apparatus may display the pointer 205 such that the pointer 205 corresponds to the calculated coordinates.

FIG. 4(c) illustrates a case in which the user moves the remote controller 200 away from the display 180 in a state in which the user pushes a predetermined button of the remote controller 200. As a result, a selected area in the display 180 corresponding to the pointer 205 may be zoomed in and thus displayed on the display 180 in an enlarged state. When the user moves the remote controller 200 toward the display 180, on the other hand, a selected area in the display 180 corresponding to the pointer 205 may be zoomed out and thus displayed on the display 180 in a reduced state. Alternatively, the selected area may be zoomed out when the remote controller 200 moves away from the display 180 and the selected area may be zoomed in when the remote controller 200 moves toward the display 180.

Meanwhile, the up, down, left, and right movements of the remote controller 200 may not be recognized in a state in which a predetermined button of the remote controller 200 is pushed. That is, when the remote controller 200 moves away from or toward the display 180, the up, down, left, and right movements of the remote controller 200 may not be recognized and only the back and forth movements of the remote controller 200 may be recognized. In a state in which a predetermined button of the remote controller 200 is not pushed, only the pointer 205 moves in accordance with the up, down, left or right movement of the remote controller 200.

Meanwhile, the movement speed or the movement direction of the pointer 205 may correspond to the movement speed or the movement direction of the remote controller 200.

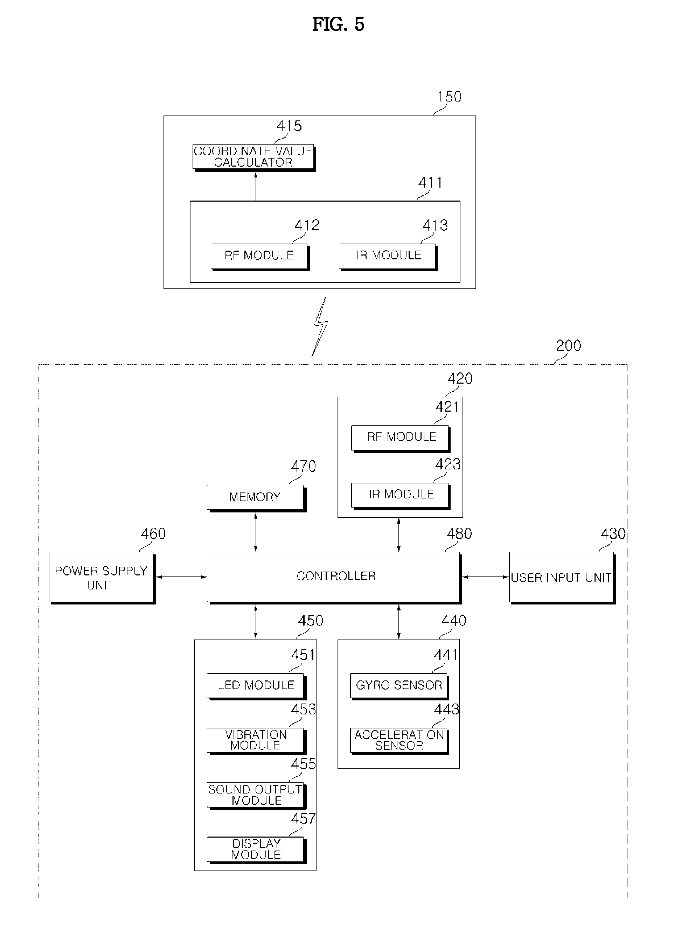

FIG. 5 is an internal block diagram of the remote controller of FIG. 2.

Referring to FIG. 5, the remote controller 200 may include a wireless communication unit 420, a user input unit 430, a sensor unit 440, an output unit 450, a power supply unit 460, a memory 470, and a controller 480.

The wireless communication unit 420 transmits and receives signals to and from any one of the image display apparatuses according to the embodiments of the present invention as previously described. Among the image display apparatuses according to the embodiments of the present invention, the image display apparatus 100 will hereinafter be described by way of example.

In this embodiment, the remote controller 200 may include an RF module 421 to transmit and receive signals to and from the image display apparatus 100 according to an RF communication standard. In addition, the remote controller 200 may further include an IR module 423 to transmit and receive signals to and from the image display apparatus 100 according to an IR communication standard.

In this embodiment, the remote controller 200 may transmit a signal containing information regarding motion of the remote controller 200 to the image display apparatus 100 through the RF module 421.

In addition, the remote controller 200 may receive a signal from the image display apparatus 100 through the RF module 421. In addition, the remote controller 200 may transmit a command, such as a power on/off command, a channel switch command, or a volume change command, to the image display apparatus 100 through the IR module 423 as needed.

The user input unit 430 may include a keypad, a button, a touchpad, or a touchscreen. The user may input a command related to the image display apparatus 100 to the remote controller 200 by manipulating the user input unit 430. In a case in which the user input unit 430 includes a hard key button, the user may input a command related to the image display apparatus 100 to the remote controller 200 by pushing the hard key button. On the other hand, in a case in which the user input unit 430 includes a touchscreen, the user may input a command related to the image display apparatus 100 to the remote controller 200 by touching a soft key of the touchscreen. In addition, the user input unit 430 may include various kinds of input tools, such as a scroll key and a jog wheel. However, this embodiment does not limit the scope of the present invention.

The sensor unit 440 may include a gyro sensor 441 or an acceleration sensor 4243. The gyro sensor 441 may sense information regarding motion of the remote controller 200.

For example, the gyro sensor 441 may sense information regarding motion of the remote controller 200 in x, y, and z-axis directions. The acceleration sensor 443 may sense information regarding movement speed of the remote controller 200. Meanwhile, the sensor unit 440 may further include a distance sensor to sense the distance between the remote controller 200 and the display 180.

The output unit 450 may output a video or audio signal corresponding to manipulation of the user input unit 430 or a video or audio signal corresponding to a signal received from the image display apparatus 100. The user may recognize whether the user input unit 430 has been manipulated or whether the image display apparatus 100 has been controlled, through the output unit 450.

For example, the output unit 450 may include a light emitting diode (LED) module 451 to be lit, a vibration module 453 to generate vibration, a sound output module 455 to output a sound, or a display module 457 to output an image when the user input unit 430 is manipulated or when a signal is received from or transmitted to the image display apparatus 100 through the wireless communication module 420.

The power supply unit 460 supplies power to the remote controller 200. In a case in which the remote controller 200 is not operated for a predetermined time, the power supply unit 460 may interrupt the supply of power to the remote controller 200 in order to reduce power consumption. The power supply unit 460 may resume the supply of power to the remote controller 200 when a predetermined key of the remote controller 200 is manipulated.

The memory 470 may store various types of programs and application data necessary to control or operate the remote controller 200. The remote controller 200 may wirelessly transmit and receive signals to and from the image display apparatus 100 over a predetermined frequency band through the RF module 421. The controller 480 of the remote controller 200 may store and refer to information regarding a frequency band used for the remote controller 200 to wirelessly transmit and receive signals to and from the paired image display apparatus 100 in the memory 270.

The controller 480 controls overall operation of the remote controller 200. The controller 480 may transmit a signal corresponding to manipulation of a predetermined key of the user input unit 430 or a signal corresponding to motion of the remote controller 200 sensed by the sensor unit 440 to the image display apparatus 100 through the wireless communication unit 420.

The user input interface unit 150 of the image display apparatus 100 may include a wireless communication unit 411 to wirelessly transmit and receive signals to and from the remote controller 200 and a coordinate value calculator 415 to calculate a coordinate value of the pointer corresponding to the motion of the remote controller 200.

The user input interface unit 150 may wirelessly transmit and receive signals to and from the remote controller 200 through an RF module 412. In addition, the user input interface unit 150 may receive a signal transmitted from the remote controller 200 according to an IR communication standard through an IR module 413.

The coordinate value calculator 415 may correct a hand tremor or an error from a signal corresponding to motion of the remote controller 200 received through the wireless communication unit 411 to calculate a coordinate value (x, y) of the pointer 205 to be displayed on the display 180.

A signal transmitted from the remote controller 200, which is input to the image display apparatus 100 through the user input interface unit 150, is transmitted to the controller 170 of the image display apparatus 100. The controller 170 may differentiate information regarding motion and key manipulation of the remote controller 200 from the signal transmitted from the remote controller 200 and may control the image display apparatus 100 in response to the differentiation.

In another example, the remote controller 200 may calculate a coordinate value of the pointer corresponding to motion of the remote controller 200 and output the calculated coordinate value to the user input interface unit 150 of the image display apparatus 100. In this case, the user input interface unit 150 of the image display apparatus 100 may transmit information regarding the received coordinate value of the pointer to the controller 170 without correcting a hand tremor or an error.

In a further example, the coordinate value calculator 415 may not be provided in the user input interface unit 150 but may be provided in the controller 170 unlike the drawing.

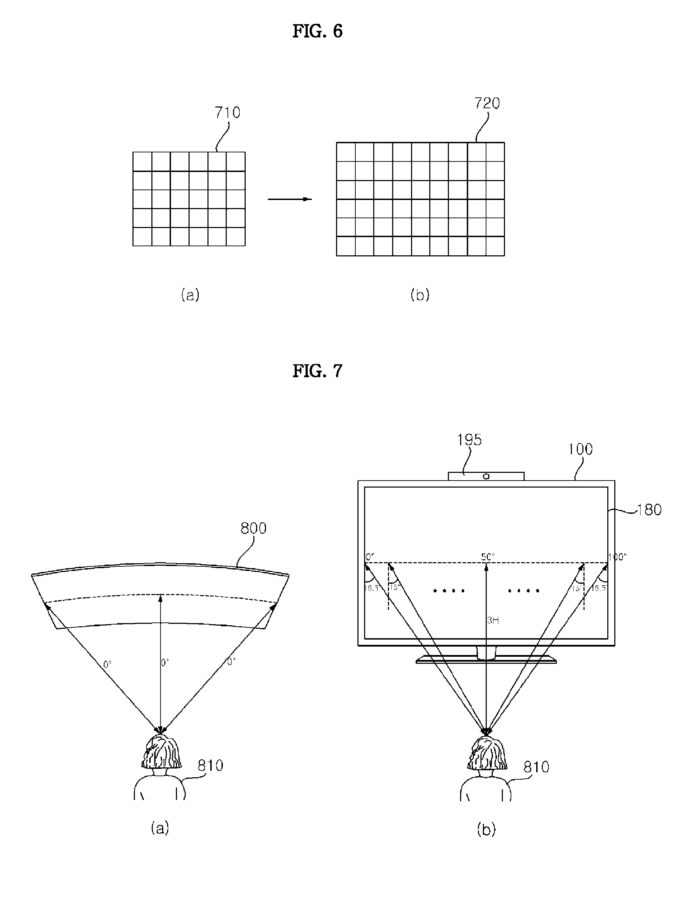

FIG. 6 is a view showing a conventional one-dimensional scaler.

Referring to FIG. 6, a first image 710 is scaled into a second image 720 by the conventional scaler.

The conventional scaler, which converts the number of pixels (or an aspect ratio) of an image signal such that the number of the pixels (or the aspect ratio) of the image signal corresponds to the number of the pixels (or the aspect ratio) of the display, changes the number of the pixels of the image signal in a horizontal direction and/or a vertical direction by a predetermined ratio.

This means that one-dimensional conversion is performed in the horizontal direction or the vertical direction and does not mean that pixels arranged in the horizontal direction are vertically moved from arbitrary horizontal positions or pixels arranged in the vertical direction are horizontally moved from arbitrary vertical positions.

Only the horizontal positions of the pixels arranged at the same vertical positions are changed while the vertical positions of the pixels arranged at the same vertical positions are not changed. In the same manner, only the vertical positions of the pixels arranged at the same horizontal positions are changed while the horizontal positions of the pixels arranged at the same horizontal positions are not changed. For this reason, the conventional scaler may be referred to as a one-dimensional scaler.

Since the image is maintained in a rectangular shape before and after the number of the pixels is converted for aspect ratio conversion as previously described, the horizontal positions of the pixels arranged at the same horizontal positions are not changed. In the same manner, the vertical positions of the pixels arranged at the same vertical positions are not changed before and after the number of the pixels is converted for aspect ratio conversion.

Since the entirety of the screen is linearly converted only using two constants, i.e. the horizontal conversion ratio and the vertical conversion ratio, in the conventional art, it is not possible to freely convert the image displayed on the image display apparatus from an arbitrary position in upward, downward, left, and right directions by a desired ratio.

FIG. 7 is a view showing relationships between various types of image display apparatuses and a user.

First, FIG. 7(a) illustrates a curved image display apparatus 800 including a display having predetermined curvature.

In a case in which the radius of curvature of the curved image display apparatus 800 of FIG. 7(a) is equal to a viewing distance, which means that the distance between the middle of a screen and a user 810, the distance between the left end of the screen and the user 810, and the distance between the right end of the screen and the user 810 are the same, the user 810 may feel an immersion effect. In addition, viewing angles at all vertical lines of the screen are the same and, therefore, the user 810 may enjoy uniform quality of an image.

On the other hand, FIG. 7(b) illustrates an image display apparatus 100 including a flat panel display 180.

In a case in which the user 810 is located at a standard viewing distance, e.g. a distance of 3H (H: height of a screen), from the image display apparatus 100 of FIG. 7(b), the viewing distance varies from each end to the middle of the display 180.

In particular, the viewing angle at the edge, i.e. the left end or the right end, of the display 180 is 16.5 degrees (= tan-1((16/9)*0.5/3)), which is different from the viewing angle at the middle of the display 180. As a result, it is difficult for the user 810 to enjoy uniform quality of an image. Since the visual size of the pixels at the left end and the right end of the display 180 is decreased in inverse proportion to the viewing distance. As a result, an immersion effect is reduced.

In addition, even in the vertical direction, the viewing distance, i.e. the viewing angle, at the upper end and the lower end of the screen is different from the viewing distance, i.e. the viewing angle, at the middle of the display 180. As a result, the same phenomenon occurs.

In order to solve the above problem, the present invention proposes a nonlinear scaling method. According to the nonlinear scaling method, even the flat panel display 180 has a curved effect. Meanwhile, the nonlinear scaling method may be applied to the curved image display apparatus 800 of FIG. 7(a).

The nonlinear scaling method will hereinafter be described in more detail with reference to FIG. 8 and the following drawings.

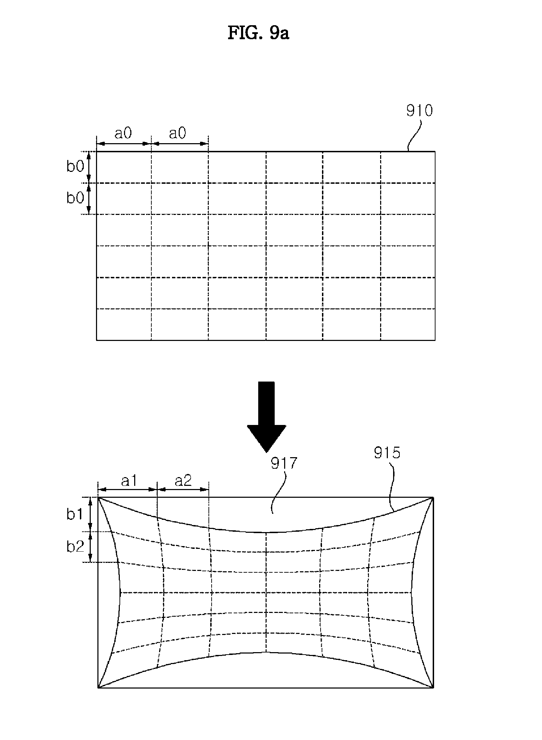

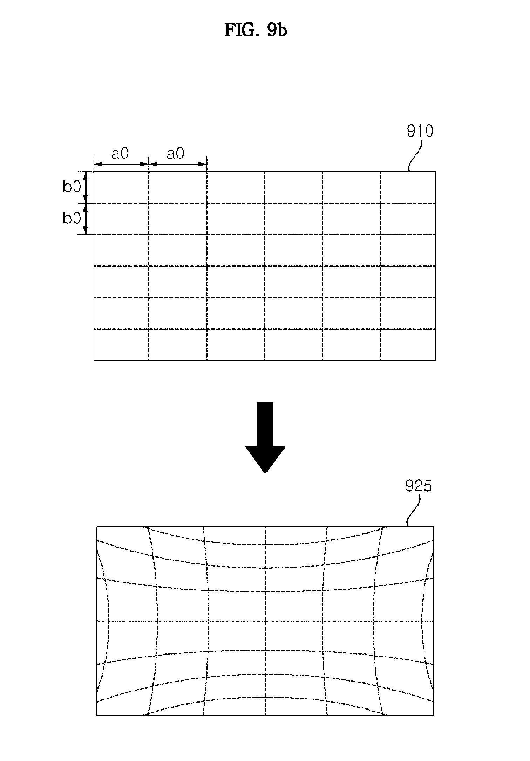

FIG. 8 is a flowchart showing an operation method of the image display apparatus according to an embodiment of the present invention and FIGS. 9 to 26 are reference views illustrating the operation method of FIG. 8.

Referring to FIG. 8, the controller 170 of the image display apparatus 100 receives an image (S810).

The controller 170 of the image display apparatus 100 may receive a broadcast image, an external input image, an image stored in the memory 140, etc.

The controller 170 of the image display apparatus 100 may include a nonlinear scaling controller 2000 (see FIG. 21) to output a nonlinear scaling factor corresponding to a user's viewing angle and an image processing unit 325 (see FIG. 21) to perform nonlinear scaling for a received image using the nonlinear scaling factor in a curved display mode.

Consequently, the image processing unit 325 (see FIG. 21) may receive a broadcast image, an external input image, an image stored in the memory 140, etc.

Next, the controller 170 of the image display apparatus 100 receives information regarding a user's viewing angle (S820).

The controller 170 of the image display apparatus 100, specifically the nonlinear scaling controller 2000 (see FIG. 21), may receive a user capture image from the camera unit 195. The controller 170 of the image display apparatus 100 may recognize a user from the captured image and calculate a user's viewing distance, a horizontal viewing angle,

and a vertical viewing angle based on the user recognition.

Alternatively, the controller 170 of the image display apparatus 100, specifically the nonlinear scaling controller 2000 (see FIG. 21), may acquire the user's viewing distance, the horizontal viewing angle, and the vertical viewing angle based on a user input signal input through the user input interface unit 150.

Next, the controller 170 of the image display apparatus 100 performs nonlinear scaling for the received image based on the information regarding the user's viewing angle (S830).

In a case in which a curved display mode is set, the controller 170 of the image display apparatus 100, specifically the nonlinear scaling controller 2000 (see FIG. 21), may output a nonlinear scaling factor corresponding to the user's viewing angle to the image processing unit 325 (see FIG. 21).

The nonlinear scaling factor may include a vertical conversion ratio and a horizontal conversion ratio for nonlinear scaling.

The image processing unit 325 (see FIG. 21) may perform nonlinear scaling for pixels arranged in a vertical direction using the vertical conversion ratio. In addition, the image processing unit 325 (see FIG. 21) may perform nonlinear scaling for pixels arranged in a horizontal direction using the horizontal conversion ratio.

The image processing unit 325 (see FIG. 21) may nonlinearly change at least one selected from between the size and position of pixels in the image during nonlinear scaling.

On the other hand, the image processing unit 325 (see FIG. 21) may nonlinearly change luminance of the pixels in the image during nonlinear scaling. As a result, an immersion effect or a cubic effect may be further improved.

In a concave mode of the curved display mode, the image processing unit 325 (see FIG. 21) may control at least one selected from between the size and luminance of the pixels in the image to be increased in proportion to the increase of the user's viewing angle.

In an under-scan mode of the concave mode, the image processing unit 325 (see FIG. 21) may perform nonlinear scaling such that the nonlinearly scaled image includes a concave image region and a non-signal region. In an over-scan mode of the concave mode, on the other hand, the image processing unit 325 (see FIG. 21) may perform nonlinear scaling such that the nonlinearly scaled image includes only a concave image region.

In a convex mode of the curved display mode, the image processing unit 325 (see FIG. 21) may control at least one selected from between the size and luminance of the pixels in the image to be decreased in inverse proportion to the increase of the user's viewing angle.

In an under-scan mode of the convex mode, the image processing unit 325 (see FIG. 21) may perform nonlinear scaling such that the nonlinearly scaled image includes a convex image region and a non-signal region. In an over-scan mode of the convex mode, on the other hand, the image processing unit 325 (see FIG. 21) may perform nonlinear scaling such that the nonlinearly scaled image includes only a convex image region.

Meanwhile, the nonlinear scaling controller 2000 (see FIG. 21) may output a nonlinear scaling factor corresponding to the user's viewing angle and the distance between the user and the display. In particular, nonlinear scaling may be performed in consideration of even the distance between the user and the display with the result that the user may further feel the curved effect.

The nonlinear scaling controller 2000 (see FIG. 21) may nonlinearly change at least one selected from between the size and position of the pixels in the image. In this case, the nonlinear scaling controller 2000 (see FIG. 21) may control at least one selected from between the size and position of the pixels in the image to be increased in proportion to the increase of the distance between the user and the display.

Next, the display 180 of the image display apparatus 100 displays the nonlinearly scaled image (S840).

The display 180 of the image display apparatus 100 receives the nonlinearly scaled image from the image processing unit 325 (see FIG. 21) and displays the nonlinearly scaled image. As a result, the curved effect may be provided even on the flat panel display 180.

Meanwhile, the display 180 may display any one selected from between an image corresponding to the concave mode of the curved display mode and an image corresponding to the convex mode of the curved display mode. Alternatively, the display 180 may display an image corresponding to the under-scan mode or the over-scan mode of the concave mode or an image corresponding to the under-scan mode or the over-scan mode of the convex mode

FIGS. 9A to 10B illustrate various examples of two-dimensional nonlinear scaling according to the present invention.

The two-dimensional nonlinear scaling to provide a curved effect may be performed after conventional conversion of the number of the pixels of the image for aspect ratio conversion and then correspondence of the number of the pixels of the image to the number of the pixels of the display 180.

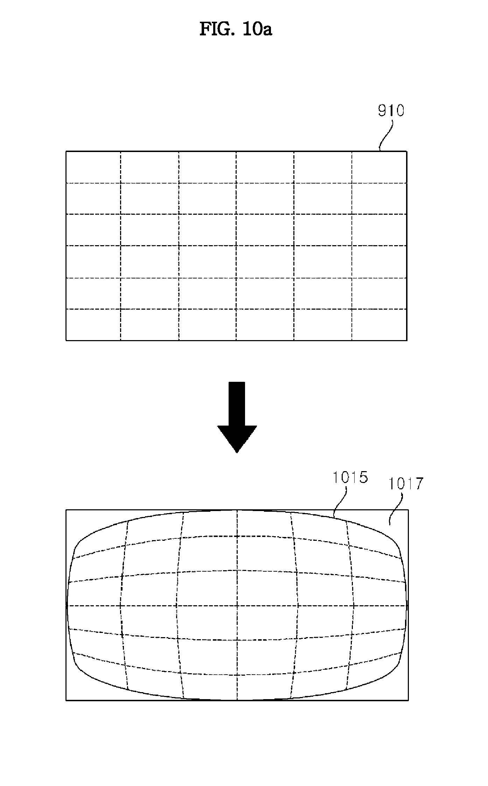

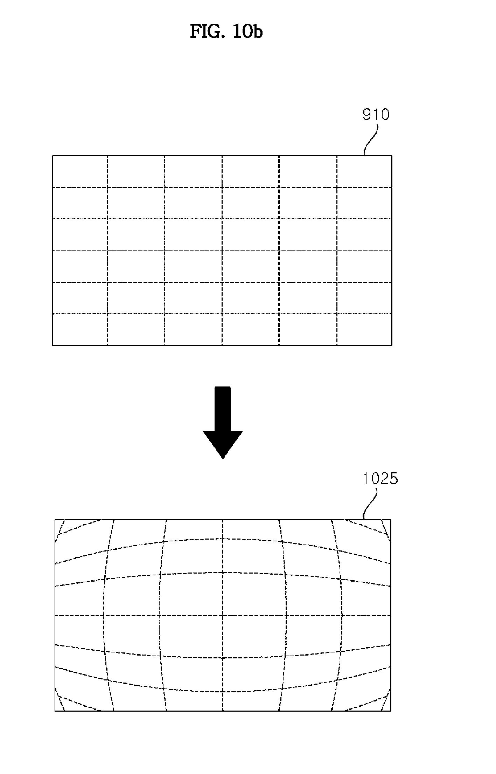

The curved effect includes a concavely curved effect as shown in FIGS. 9A and 9B and a convexly curved effect as shown in FIGS. 10A and 10B.

The concavely curved effect improves an immersion effect provided by a concavely curved screen in a movie theater or a curved image display apparatus. On the other hand, the convexly curved effect improves a cubic effect provided by gradually expanding the middle portion of the screen as compared with the edge portion of the screen as if the middle portion of the screen protrudes.

FIGS. 9A and 9B show examples of the concavely curved effect provided by a two-dimensional scaler according to the present invention.

Specifically, FIG. 9A shows a case in which a non-image region of the screen generated as pixel data are reduced through under-scanning is processed as a non-signal region.

As the result of the nonlinear scaling as described above, a horizontal size a0 and a vertical size b0 of pixels in an image 910 before nonlinear scaling and horizontal sizes a1 and a2 and vertical sizes b1 and b2 of pixels in a nonlinearly scaled image have different ratios as represented by Equation 1 below.

$$[\text{Equation 1}]$$

$$\frac{b\,0}{a\,0} \neq \frac{b\,1}{a\,1} \neq \frac{b\,2}{a\,2}$$

As the result of under-scanning, the nonlinearly scaled image includes a concave image region 915 and a non-signal region 917 based on nonlinear scaling.

FIG. 9B shows a case in which the screen is filled with an image through over-scanning and data corresponding to an edge portion of the image which is not displayed on the screen are discarded.

Similarly to FIG. 9A, a horizontal size a0 and a vertical size b0 of pixels in an image 910 before nonlinear scaling and a horizontal size and a vertical size of pixels in a nonlinearly scaled image have different ratios.

As the result of over-scanning, the nonlinearly scaled image includes only a concave image region 925 based on nonlinear scaling without a non-signal region.

FIGS. 10A and 10B show examples of the convexly curved effect provided by the two-dimensional scaler according to the present invention.

Specifically, FIG. 10A shows a case in which a non-image region of the screen generated as pixel data are reduced through under-scanning is processed as a non-signal region.

A horizontal size a0 and a vertical size b0 of pixels in an image 910 before nonlinear scaling and a horizontal size and a vertical size of pixels in a nonlinearly scaled image have different ratios.

As the result of under-scanning, the nonlinearly scaled image includes a convex image region 1015 and a non-signal region 1017 based on nonlinear scaling.

FIG. 10B shows a case in which the screen is filled with an image through over-scanning and data corresponding to an edge portion of the image which is not displayed on the screen are discarded.

A horizontal size a0 and a vertical size b0 of pixels in an image 910 before nonlinear scaling and a horizontal size and a vertical size of pixels in a nonlinearly scaled image have different ratios.

As the result of over-scanning, the nonlinearly scaled image includes only a convex image region 1025 based on nonlinear scaling without a non-signal region.

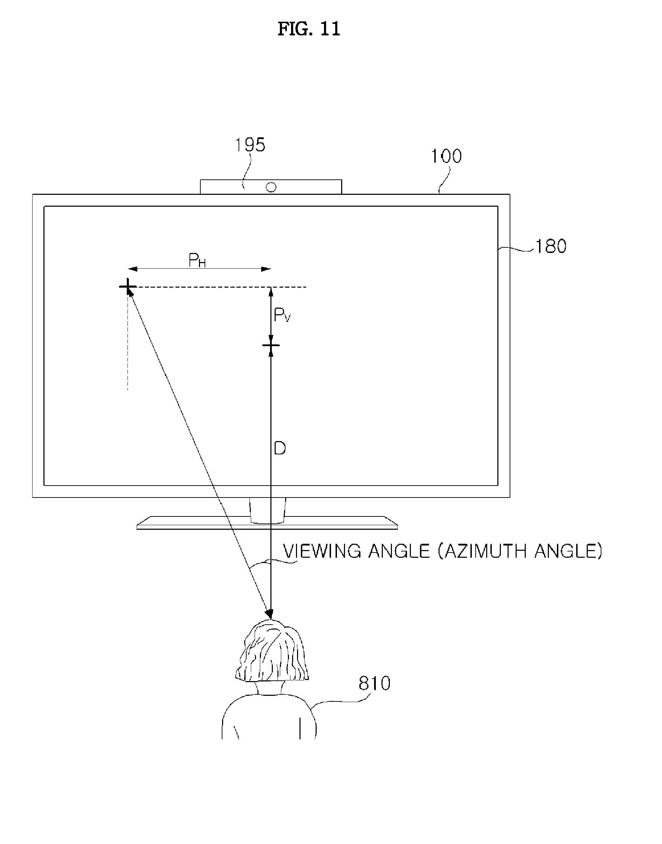

FIG. 11 illustrates a viewing angle calculation method based on user's gaze.

First, a viewing angle is set to 0 degrees in a case in which the user 810 views the middle of the display 180 and the viewing angle is set to be gradually increased as the user's gaze is directed from the middle of the display 180 to each side end of the display 180.

The viewing angle at each viewing point on the display 180 is calculated as represented by Equation 2 below.

$$[\text{Equation 2}]$$

$$\theta = COS^{-1}\left(\frac{D}{\sqrt{D^2 + \left(\frac{16}{9}P_H\right)^2 + P_V^{\,2}}}\right)$$

Where D indicates a distance between the middle of the display 180 and the user 810 (In particular, D may be expressed as a multiple of the height of the display 180), $P_H$ indicates a horizontal distance from the middle of the display 180 to a viewing angle measurement point (In particular, $P_H$ may be expressed as a multiple of the height of the display 180), and $P_V$ indicates a horizontal distance from the middle of the display 180 to a viewing angle measurement point (In particular, $P_V$ may be expressed as a multiple of the height of the display 180).

In a case in which an aspect ratio of the display 180 is 16:9, 16/9 is used as a coefficient placed before the $P_H$. This coefficient may vary based on the aspect ratio of the display 180.

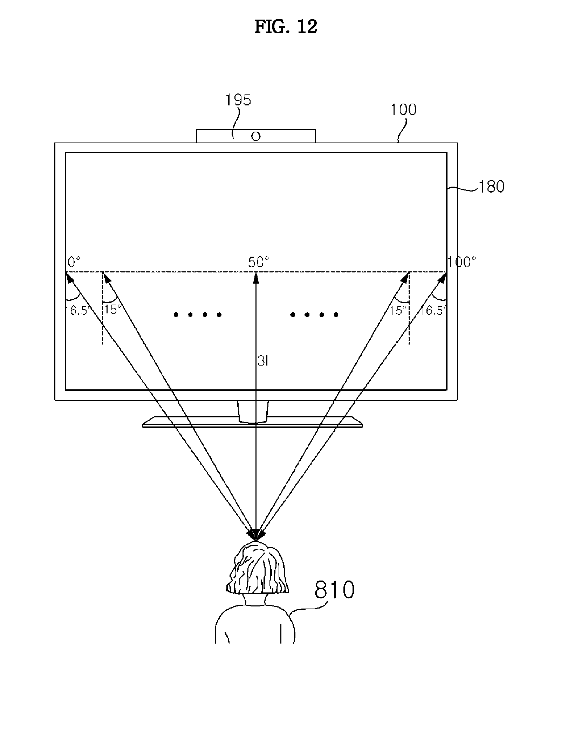

Viewing angles as shown in FIG. 12 may be acquired through Equation 2.

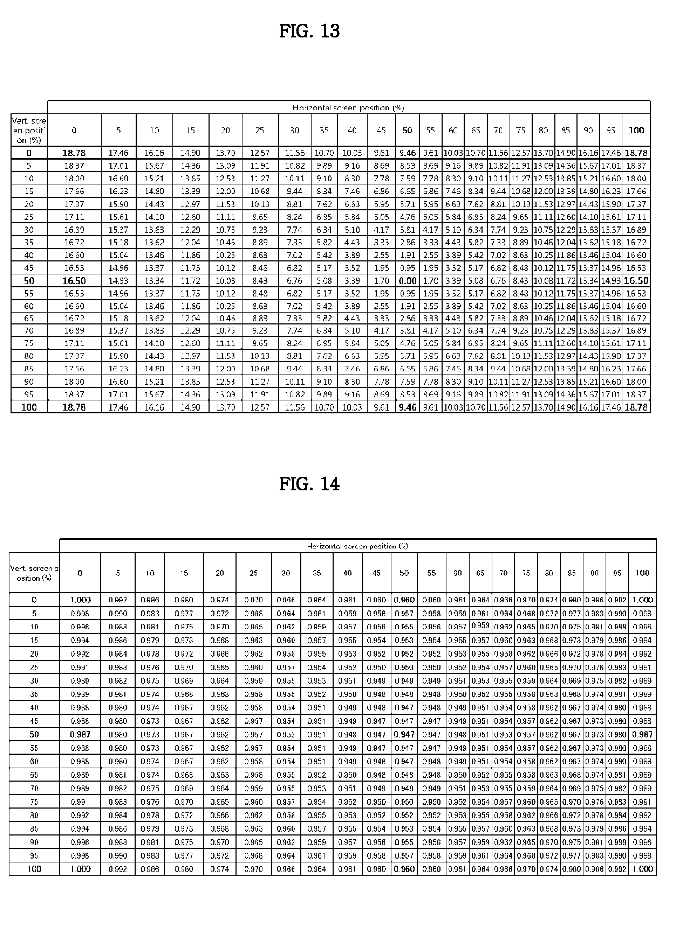

FIGS. 12 and 13 illustrate various viewing angles based on user's gaze.

Referring to FIGS. 12 and 13, in a case in which the user 810 located at a distance of 3H from the middle of the display 180 views the very middle of the display 180, a viewing angle is 0 degrees. Horizontal viewing angles at the left end and the right end of the display 180 are 16.5 degrees.

Vertical viewing angles at the upper end and the lower end of the display 180 are 9.46 degrees.

On the other hand, the horizontal viewing angle of 16.5 degrees and the vertical viewing angle of 9.46 degrees are combined into an azimuth angle of 18.78 degrees, which is the largest viewing angle, at each corner of the display 180.

Since actual viewing distances to the respective points of the display 180 are different from each other, the visual sizes of the pixels as well as the viewing angles are different from each other.

That is, the distance between the user 810 and the pixels is increased from the middle to the edge of the display 180 with the result that the visual sizes of the pixels are decreased. In order to compensate for the decrease in visual sizes of the pixels, it is necessary to calculate a reciprocal of the distance.

FIG. 14 illustrates a scaling factor in the under-scan mode of the concave mode as previously described.

In the concave mode, nonlinear scaling is performed such that the sizes of the pixels at the middle of the display 180 are the smallest and the sizes of the pixels at the four corners of the display 180 are the largest.

Particularly, in the under-scan mode, a scaling ratio at the four corners of the display 180 is set to 1 and the scaling ratio is set to be gradually decreased toward the middle of the display 180. In particular, the scaling ratio is set using the viewing angle information of FIG. 13.

Consequently, the scaling ratio at the middle of the display 180 may be 0.947, the scaling ratio at the upper end and the lower end of the display 180 may be 0.960, and the scaling ratio at the left end and the right end of the display 180 may be 0.987.

As shown in FIG. 14, therefore, the sizes of the pixels vary according to the nonlinear scaling method.

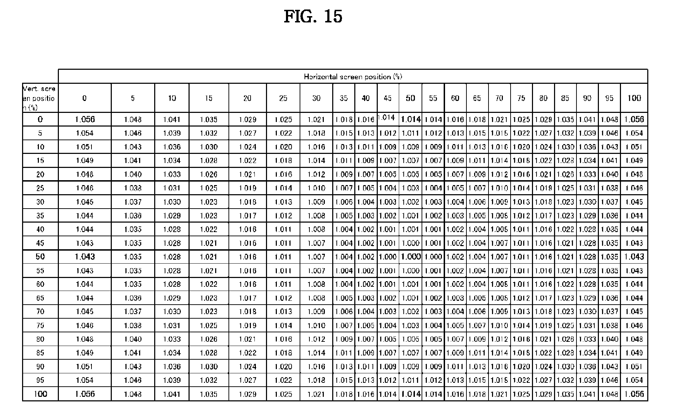

FIG. 15 illustrates a scaling factor in the over-scan mode of the concave mode as previously described.

In the concave mode, nonlinear scaling is performed such that the sizes of the pixels at the middle of the display 180 are the smallest and the sizes of the pixels at the four corners of the display 180 are the largest.

Particularly, in the over-scan mode, a scaling ratio at the middle of the display 180 is set to 1 and the scaling ratio is set to be gradually increased toward the four corners of the display 180. In particular, the scaling ratio is set using the viewing angle information of FIG. 13.

Consequently, the scaling ratio at the middle of the display 180 may be 1, the scaling ratio at the upper end and the lower end of the display 180 may be 1.014, the scaling ratio at the left end and the right end of the display 180 may be 1.043, and the scaling ratio at the four corners of the display 180 may be 1.056.

As shown in FIG. 15, therefore, the sizes of the pixels vary according to the nonlinear scaling method.

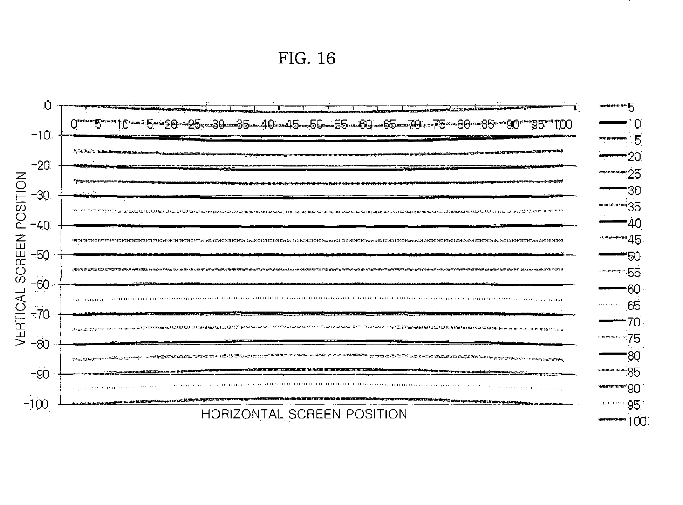

FIG. 16 is a view showing vertical movement of the pixels according to nonlinear scaling in the under-scan mode of the concave mode.

The positions of the respective pixels may correspond to positions stored by a vertical address of a frame memory 2025 (see FIG. 21), which will hereinafter be described.

FIG. 16 illustrates that the pixels on horizontal line 0 to horizontal line 100 are nonlinearly scaled and thus are moved in the vertical direction for the sake of convenience. As can be seen from FIG. 16, the pixels on the middle line, i.e. line 50, of the display 180 do not move in the vertical direction and the pixels distant from the middle line are vertically moved toward the middle of the display.

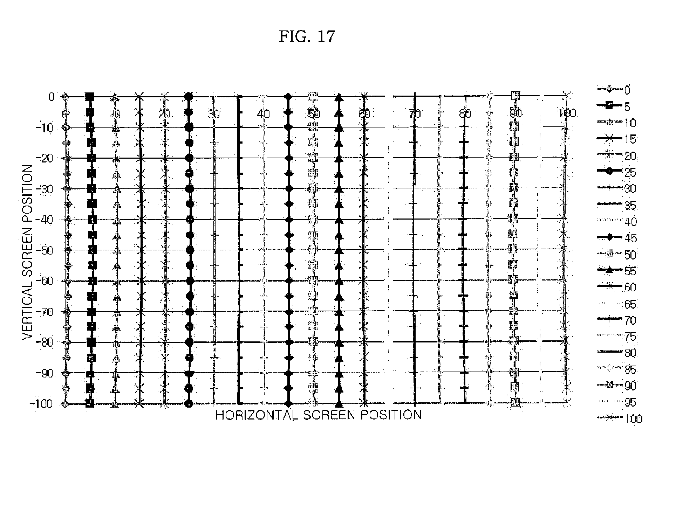

FIG. 17 is a view showing horizontal movement of the pixels according to nonlinear scaling in the under-scan mode of the concave mode.

The positions of the respective pixels may correspond to positions stored by a horizontal address of the frame memory 2025 (see FIG. 21), which will hereinafter be described.

FIG. 17 illustrates that the pixels on vertical line 0 to horizontal line 100 are nonlinearly scaled and thus are moved in the horizontal direction for the sake of convenience. As can be seen from FIG. 17, the pixels on the middle line, i.e. line 50, of the display 180 do not move in the horizontal direction and the pixels distant from the middle line are horizontally moved toward the middle of the display.

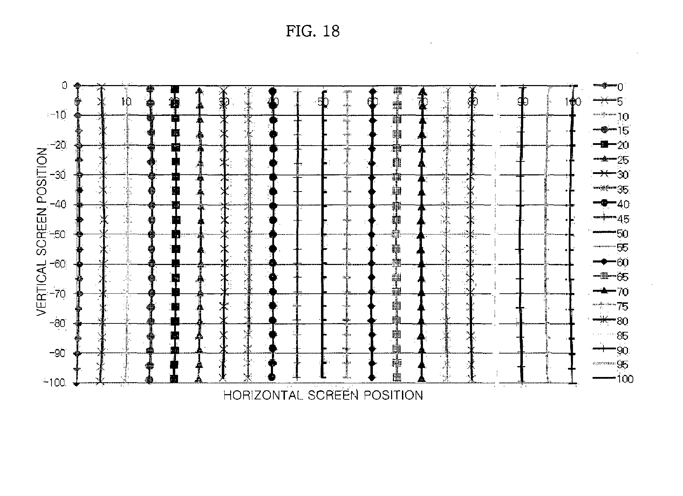

FIG. 18 is a view showing vertical and horizontal movement of the pixels based on a combination of FIGS. 16 and 17.

As shown in FIG. 18, nonlinear scaling is performed in the under-scan mode of the concave mode.

In the under-scan mode of the convex mode, on the other hand, the pixels on the horizontal middle line, i.e. line 50, of the display 180 may not move in the vertical direction and the pixels distant from the middle line may be vertically moved toward the edge of the display in the opposite manner to FIG. 16 although not shown. In addition, the pixels on the vertical middle line, i.e. line 50, of the display 180 may not move in the horizontal direction and the pixels distant from the middle line may be horizontally moved toward the edge of the display.

On the other hand, the pixels may not be moved in both the vertical direction and the horizontal direction but may be moved only in the vertical direction unlike FIG. 18.

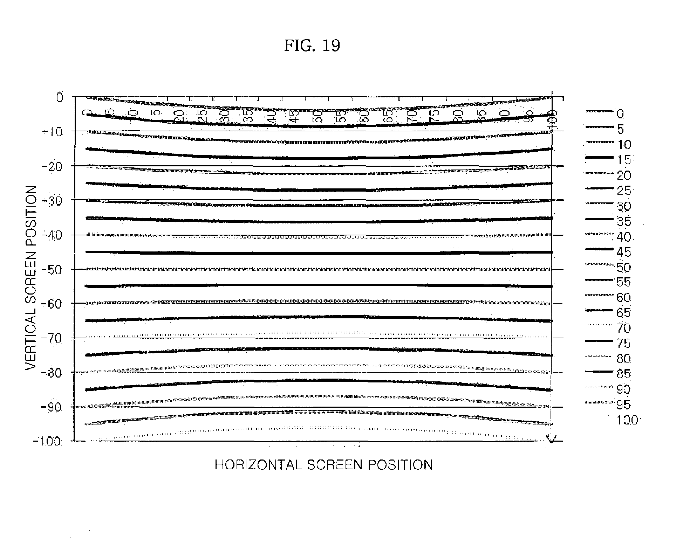

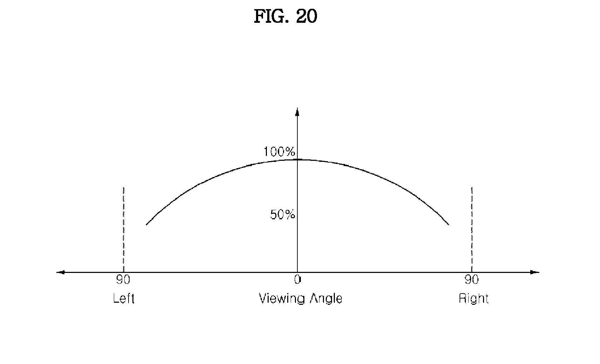

FIG. 19 illustrates vertical movement of the pixels in a similar manner to FIG. 16.

In FIG. 19, however, the horizontal movement of the pixels shown in FIG. 18 is further reflected as the vertical movement of the pixels. It can be seen from FIG. 19 that the vertical movement of the pixels shown in FIG. 19 is greater than that of the pixels shown in FIG. 16 or 18.

FIG. 20 illustrates the change of luminance based on the viewing angle of the flat panel display 180.

As previously described, the viewing angle based on the user's gaze is gradually increased from the middle to the edge of the display 180 with the result that the user may feel that the luminance of the display 180 is reduced.

That is, the display 180 has a luminance reduction rate as shown in FIG. 20. FIG. 20 shows that, in a case in which it is assumed that luminance at a viewing angle of 0 degrees is 100 %, the luminance reduction rate is gradually increased as the viewing angle is increased.

Consequently, it is possible to vary the luminance based on the viewing angle during nonlinear scaling according to the embodiment of the present invention, which will hereinafter be described with reference to FIG. 21 and the following drawings.

FIG. 21 is an internal block diagram of the image display apparatus according to the embodiment of the present invention.

The image display apparatus 100 may perform nonlinear scaling for a received image such that the image exhibits a curved effect on the flat panel display 180. In particular, image display apparatus 100 may perform nonlinear scaling for the received image in response to a user's viewing angle.

Referring to FIG. 21, the image display apparatus 100 may include an image processing unit 325 to perform nonlinear scaling using a nonlinear scaling factor and a nonlinear scaling controller 2000 to output a nonlinear scaling factor corresponding to the user's viewing angle.

The display 180 may display a nonlinearly scaled image. As a result, a curved effect may be provided even on the flat panel display 180.

The image processing unit 325 may include a line memory 2010, a luminance converter 2015, a pixel converter 2020, a frame memory 2025, and a background region combination unit 2030.

The nonlinear scaling controller 2000 may include a user recognition unit 2050, a horizontal viewing angle calculator 2052, a viewing distance calculator 2054, a vertical viewing angle calculator 2056, a luminance conversion ratio generator 2060, a vertical conversion ratio extractor 2065, a horizontal conversion ratio extractor 2068, a vertical address generator 2075, a horizontal address generator 2078, and a background region generator 2080.

The image processing unit 325 may receive an input image. The input image may be a broadcast image, an image stored in the memory, or an external input image received from an external device connected to the image display apparatus 100.

The received input image is arranged in the line memory 2010 of the image processing unit 325 in a vertical line direction and a horizontal line direction.

The luminance converter 2015 performs luminance conversion for the image signal arranged in the vertical line direction and the horizontal line direction. At this time, the luminance converter 2015 performs luminance conversion using a luminance conversion ratio generated by the luminance conversion ratio generator 2060 of the nonlinear scaling controller 2000.

For example, in the concave mode of the curved display mode, luminance conversion may be performed such that, in a case in which the user is located at the middle of the display 180, the luminance of the pixels located on the middle of the display 180 is the lowest and the luminance of the pixels is gradually increased from the middle to the edge of the display 180. In particular, the luminance conversion ratio generator 2060 may generate a luminance conversion ratio and provide the generated luminance conversion ratio to the luminance converter 2015.

In another example, in the convex mode of the curved display mode, luminance conversion may be performed such that, in a case in which the user is located at the middle of the display 180, the luminance of the pixels located on the middle of the display 180 is the highest and the luminance of the pixels is gradually decreased from the middle to the edge of the display 180. In particular, the luminance conversion ratio generator 2060 may generate a luminance conversion ratio and provide the generated luminance conversion ratio to the luminance converter 2015.

Subsequently, the pixel converter 2020 varies at least one selected from between the size and position of pixels of the luminance-converted image signal.

The pixel converter 2020 may include a vertical pixel converter 2022 and a horizontal pixel converter 2024. The vertical pixel converter 2022 and the horizontal pixel converter 2024 may perform vertical pixel conversion and horizontal pixel conversion for the input image signal.

For example, in the under-scan mode of the concave mode, the vertical pixel conversion may be performed based on the table shown in FIG. 14 such that the pixels can be moved in the vertical direction as shown in FIG. 16. On the other hand, the horizontal pixel conversion may be performed based on the table shown in FIG. 14 such that the pixels can be moved in the horizontal direction as shown in FIG. 17. As a result, an image signal having pixels moved in the vertical and horizontal directions may be output as shown in FIG. 18.

Meanwhile, the vertical conversion ratio and the horizontal conversion ratio may be generated by the vertical conversion ratio extractor 2065 and the horizontal conversion ratio extractor 2068 of the nonlinear scaling controller 2000.

The vertical conversion ratio and the horizontal conversion ratio may be calculated based on user's viewing angle information.

The user recognition unit 2050 may recognize a user based on an image of the user captured by the camera unit 195. The user recognition unit 2050 may also recognize the location of the user and user's gaze. The horizontal viewing angle calculator 2052 and the vertical viewing angle calculator 2056 calculate a horizontal viewing angle and a vertical viewing angle, respectively, based on the location of the user and the user's gaze.

For example, in a case in which the user is located at the middle of the display 180, the horizontal viewing angle and the vertical viewing angle may be calculated as shown in FIG. 13.

Meanwhile, the viewing distance calculator 2054 may calculate the distance between the user and the display 180 based on the location of the user.

On the other hand, the horizontal viewing angle, the viewing distance, and the vertical viewing angle may be input through an additional user input in addition to the camera unit 190.

The calculated viewing distance, vertical viewing angle, and horizontal viewing angle may be input to the luminance conversion ratio generator 2060, the vertical conversion ratio extractor 2065, and the horizontal conversion ratio extractor 2068, respectively.

The vertical conversion ratio extractor 2065 and the horizontal conversion ratio extractor 2068 extract different conversion ratio based on the concave mode or the convex mode of the curved display mode. In addition, the vertical conversion ratio extractor 2065 and the horizontal conversion ratio extractor 2068 extract different conversion ratio based on the under-scan mode or the over-scan mode of the concave mode or the convex mode.

Meanwhile, in a case in which the vertical conversion ratio extractor 2065 and the horizontal conversion ratio extractor 2068 output the nonlinear scaling factor, particularly the vertical conversion ratio and the horizontal conversion ratio, the vertical conversion ratio and the horizontal conversion ratio may be input to not only the pixel converter 2020 but also the vertical address generator 2075 and the horizontal address generator 2078, respectively.

As the pixels are vertically and horizontally moved through the nonlinear scaling as previously described with reference to FIGS. 16 and 17, the vertical address generator 2075 generates a vertical address based on the vertical movement of the pixels and the horizontal address generator 2078 generates a horizontal address based on the horizontal movement of the pixels.

The generated vertical and horizontal addresses are input to the frame memory 2025.

Pixel values nonlinearly scaled by the pixel converter 2020 are stored in the converted addresses of the frame memory 2025.

Meanwhile, in a case in which nonlinear scaling is performed in the under-scan mode of the concave mode or the convex mode, a non-signal region is present in the edge of each image as previously described. That is, the background region of the image is in a non-signal state.

Additional background image processing for the non-signal region may be performed.

To this end, the background region generator 2080 may generate a background region to be added to the non-signal region and output the generated background region to the background region combination unit 2030. In the under-scan mode, the background region combination unit 2030 may combine a background image with the nonlinearly scaled image and output the combined image to the display 180. At this time, combination of the background image may be selectively performed.

According to FIG. 21, therefore, the size or position of the pixels in the screen may be nonlinearly changed to provide a curved effect during nonlinear scaling.

The image processing unit 325 may nonlinearly change at least one selected from between the size and position of the pixels in the image during nonlinear scaling.

On the other hand, the image processing unit 325 may nonlinearly change luminance of the pixels in the image based on the nonlinear scaling factor during nonlinear scaling. As a result, an immersion effect or a cubic effect may be further improved.

In the concave mode of the curved display mode, the image processing unit 325 may control at least one selected from between the size and luminance of the pixels in the image to be increased in proportion to the increase of the user's viewing angle.

In the under-scan mode of the concave mode, the image processing unit 325 may perform nonlinear scaling such that the nonlinearly scaled image includes a concave image region and a non-signal region. In the over-scan mode of the concave mode, on the other hand, the image processing unit 325 may perform nonlinear scaling such that the nonlinearly scaled image includes only a concave image region.

In the convex mode of the curved display mode, the image processing unit 325 may control at least one selected from between the size and luminance of the pixels in the image to be decreased in inverse proportion to the increase of the user's viewing angle.

In the under-scan mode of the convex mode, the image processing unit 325 may perform nonlinear scaling such that the nonlinearly scaled image includes a convex image region and a non-signal region. In the over-scan mode of the convex mode, on the other hand, the image processing unit 325 may perform nonlinear scaling such that the nonlinearly scaled image includes only a convex image region.

As a result, an immersion effect may be provided in the concave mode of the curved display mode and a cubic effect may be provided in the convex mode of the curved display mode. Consequently, it is possible to provide various image viewing effects.

Meanwhile, the nonlinear scaling controller 2000 may output a nonlinear scaling factor corresponding to the user's viewing angle and the distance between the user and the display. In particular, nonlinear scaling may be performed in consideration of even the distance between the user and the display with the result that the user may further feel the curved effect.

The nonlinear scaling controller 2000 may nonlinearly change at least one selected from between the size and position of the pixels in the image. In this case, the nonlinear scaling controller 2000 may control at least one selected from between the size and position of the pixels in the image to be increased in proportion to the increase of the distance between the user and the display.

On the other hand, it is possible to select any one from between the under-scan mode and the over-scan mode of the concave mode or the convex mode based on a user input, thereby improving user convenience.

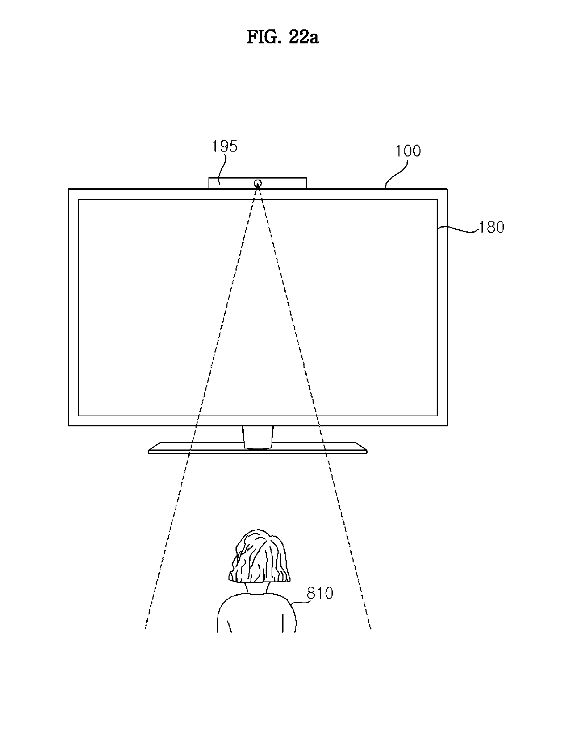

FIGS. 22A to 23E illustrate various scenes for curved display.

FIG. 22A illustrates that the camera unit 195 of the image display apparatus 100 captures the user 810.

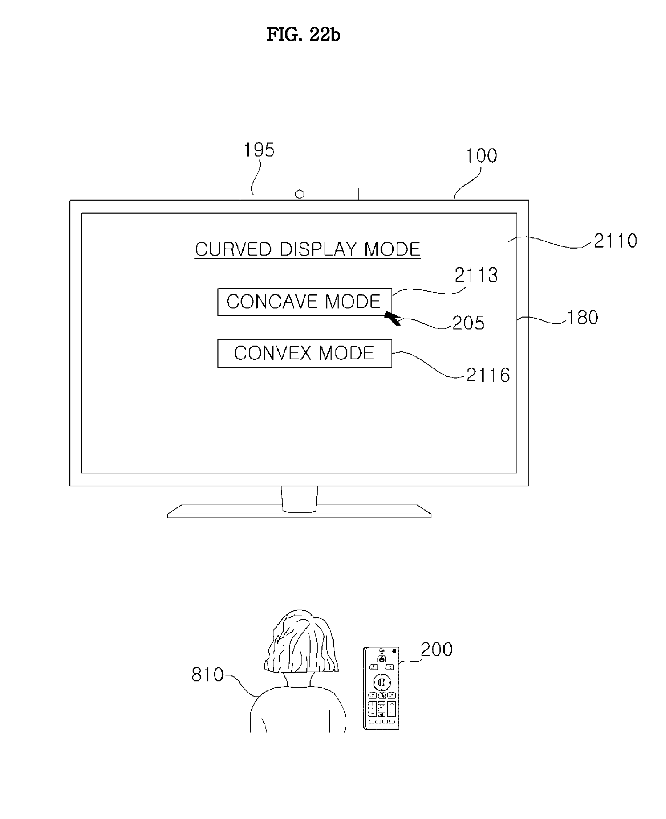

FIG. 22B illustrates that a curved display mode screen 2110 is displayed on the display 180 according to a user input or automatically after capturing of the camera unit 195. The user 810 may select any one from between a concave mode 2113 and a convex mode 2116 using a pointer 205 displayed based on a pointing signal of the remote controller 200. FIG. 22B illustrates that the concave mode 2113 is selected.

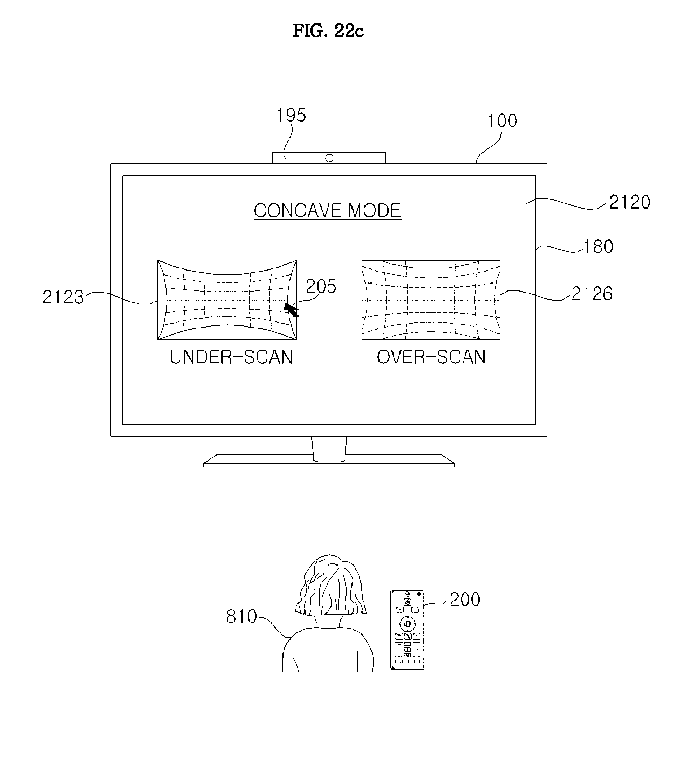

FIG. 22C illustrates that a screen 2120 to select an under-scan mode or an over-scan mode is displayed after selection of the concave mode.

The screen 2120 includes an image 2123 indicating the under-scan mode and an image 2126 indicating the over-scan mode. Consequently, it is possible for the user to intuitively select the under-scan mode or the over-scan mode.

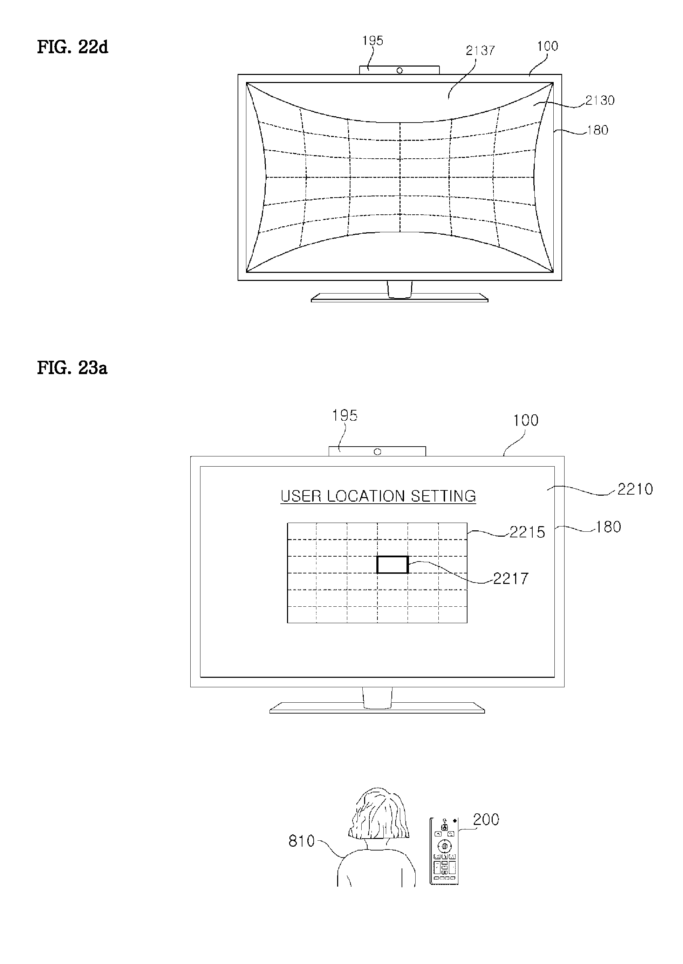

In a case in which the user 810 selects the image 2123 indicating the under-scan mode using the pointer 205 displayed based on the pointing signal of the remote controller 200, an under-scan mode image 2130 in the concave mode may be displayed as shown in FIG. 22D. At this time, a non-signal region 2137 may also be displayed.

In this case, a nonlinear scaling ratio may be decided based on the location of the user captured by the camera unit 195 or the user's gaze. That is, the nonlinear scaling ratio may be decided based on viewing angle information.

FIGS. 23A to 23E are similar to FIGS. 22A to 22D except that direction keys of the remote controller are used.

FIG. 23A illustrates a user location setting screen 2210. The user 810 may set user location while moving a cursor 2217 using the direction keys of the remote controller 200.

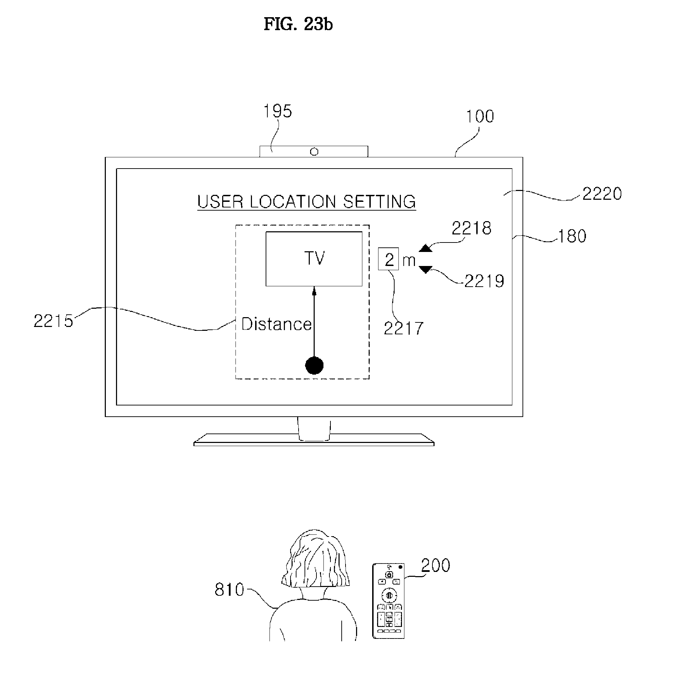

Next, FIG. 23B illustrates a user distance setting screen 2220. An image 2215 to set a user distance, a distance indication window 2217, and distance setting items 2218 and 2219 are displayed on the user distance setting screen 2220. The user 810 may select any one of the distance setting items 2218 and 2219 using the direction keys of the remote controller 200.

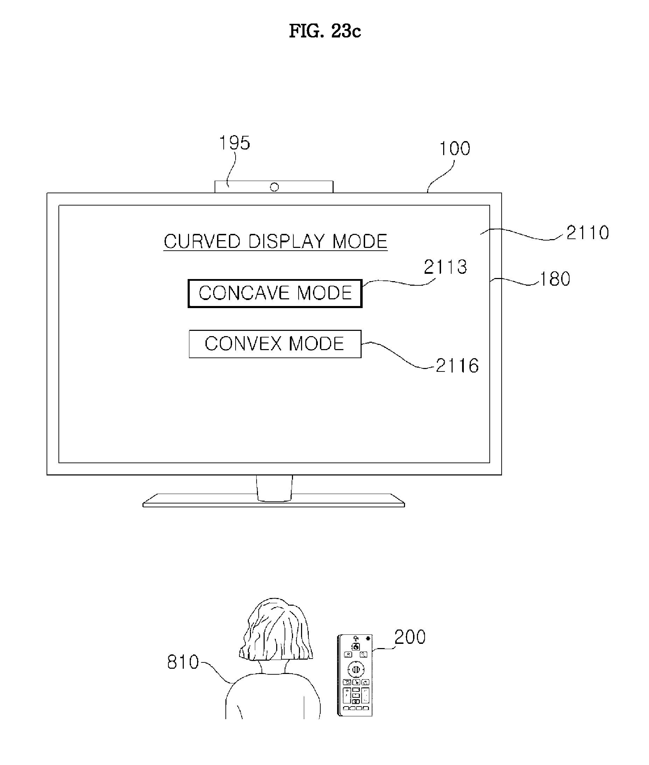

FIG. 23C illustrates a curved display mode screen 2110. The user 810 may select any one from between a concave mode 2113 and a convex mode 2116 while moving the cursor 2217 using the direction keys of the remote controller 200. FIG. 23C illustrates that the concave mode 2113 is selected.

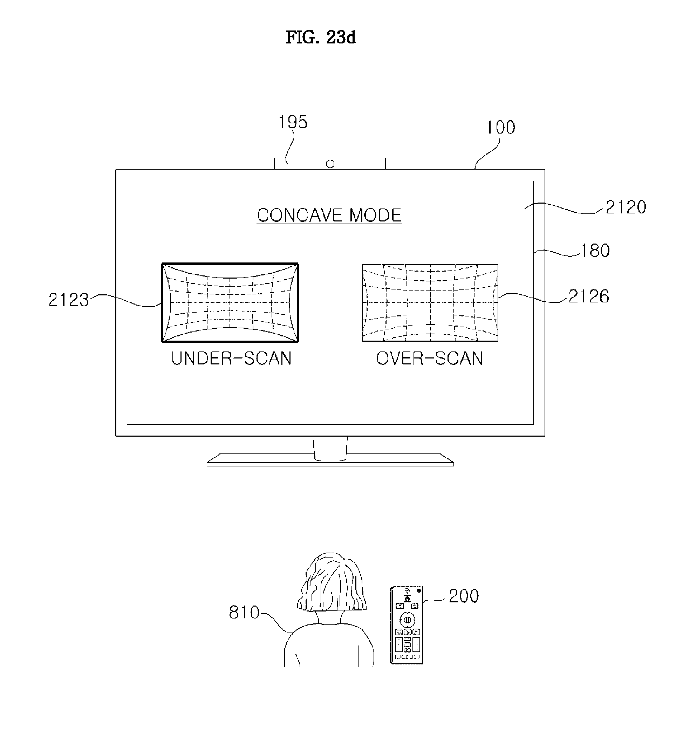

FIG. 23D illustrates that a screen 2120 to select an under-scan mode or an over-scan mode is displayed after selection of the concave mode.

The screen 2120 includes an image 2123 indicating the under-scan mode and an image 2126 indicating the over-scan mode. Consequently, it is possible for the user to intuitively select the under-scan mode or the over-scan mode.

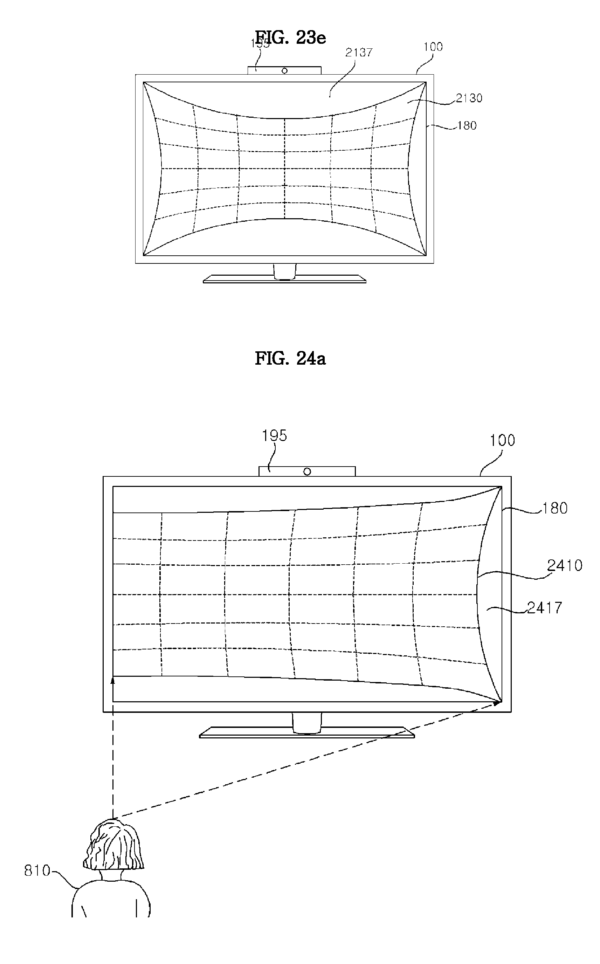

In a case in which the user 810 moves the cursor 2217 using the direction keys of the remote controller 200 to select the image 2123 indicating the under-scan mode, an under-scan mode image 2130 in the concave mode may be displayed as shown in FIG. 23E. At this time, a non-signal region 2137 may also be displayed.

Even in a case in which the user is not located at the middle of the display but is located at the left side or the right side of the display or at the upper side or the lower side of the display, on the other hand, nonlinear scaling may be performed.

FIG. 24A illustrates that the under-scan mode of the concave mode is executed in a case in which the user 810 is located near the left end of the display. It can be seen that the size of the pixels is gradually increased from the left end to the right end of the display based on the location of the user. That is, it can be seen that the size of the pixels at the left end of the display corresponding to the location of the user is the smallest.

As shown in FIG. 24A, a nonlinearly scaled image 2410 and a non-signal image region 2417 are displayed.

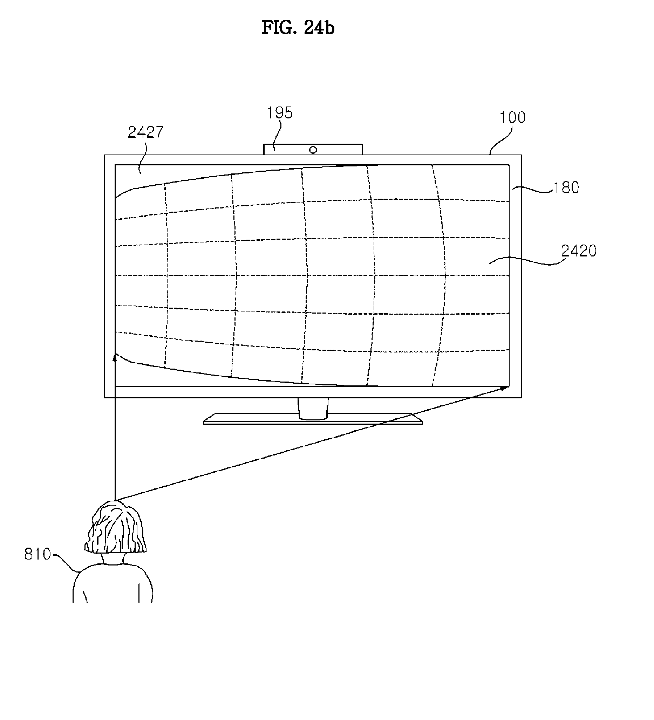

FIG. 24B illustrates that the under-scan mode of the convex mode is executed in a case in which the user 810 is located near the left end of the display. It can be seen that the size of the pixels is gradually increased from the left end to the right end of the display based on the location of the user. That is, it can be seen that the size of the pixels at the left end of the display corresponding to the location of the user is the smallest.

As shown in FIG. 24B, a nonlinearly scaled image 2420 and a non-signal image region 2427 are displayed.

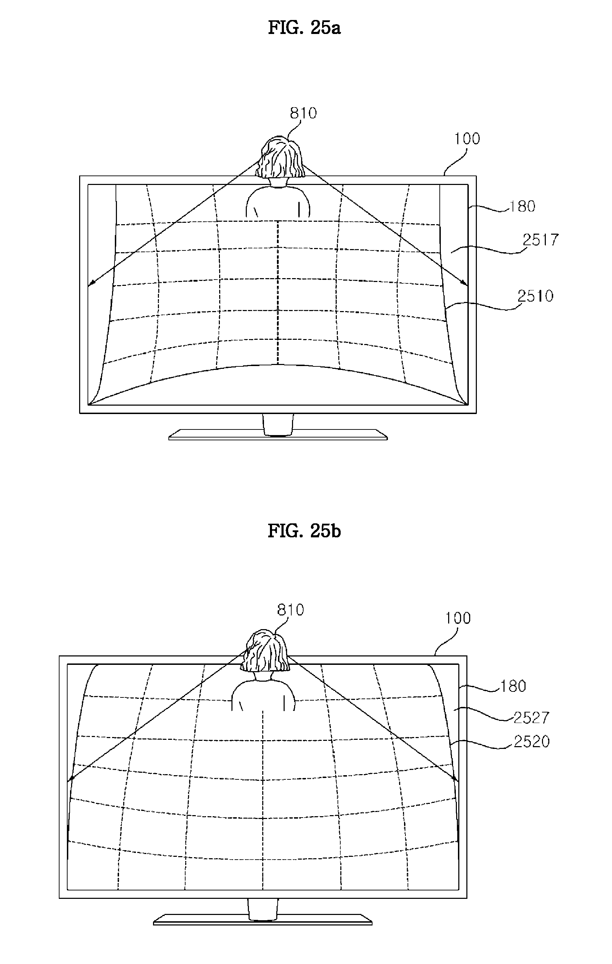

FIG. 25A illustrates that the under-scan mode of the concave mode is executed in a case in which the user 810 is located near the upper end of the display. It can be seen that the size of the pixels is gradually increased from the lower end to the upper end of the display based on the location of the user. That is, it can be seen that the size of the pixels at the lower end of the display corresponding to the location of the user is the smallest.

As shown in FIG. 25A, a nonlinearly scaled image 2510 and a non-signal image region 2517 are displayed.

FIG. 25B illustrates that the under-scan mode of the convex mode is executed in a case in which the user 810 is located near the upper end of the display. It can be seen that the size of the pixels is gradually increased from the upper end to the lower end of the display based on the location of the user. That is, it can be seen that the size of the pixels at the upper end of the display corresponding to the location of the user is the smallest.

As shown in FIG. 25B, a nonlinearly scaled image 2520 and a non-signal image region 2527 are displayed.

As described above, various types of nonlinear scaling may be performed based on the location of the user.

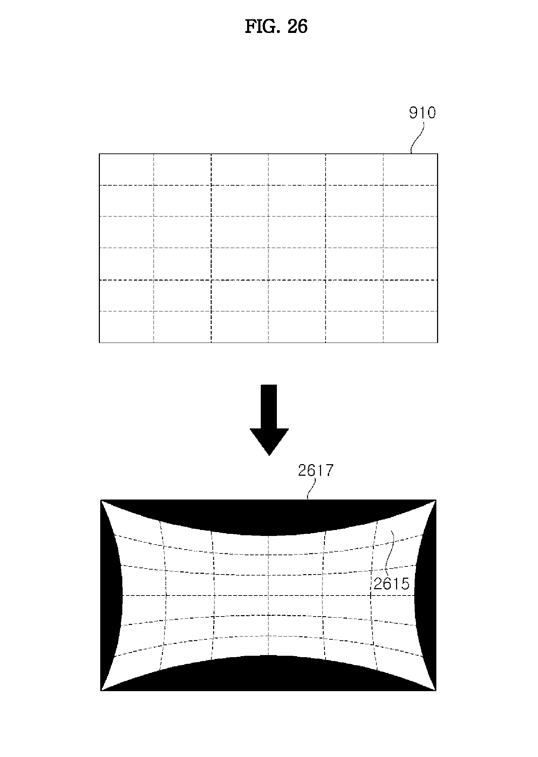

FIG. 26 illustrates that only luminance compensation and background region processing are performed.

Referring to FIG. 26, signal processing for an image 910 is performed such that the image 910 includes a luminance compensation region 2615 at which the luminance of the image 910 has been compensated for and a background region 2617 at which a background has been inserted into the image 910.

Only luminance compensation and background region processing may be performed without nonlinear scaling for pixels, such as conversion in size or position of the pixels.

In this case, it is possible to prevent minute deterioration of image quality due to combination between adjacent pixels or interpolation between adjacent pixels when the position of the pixels is converted and to obtain the minimum curved effect through the luminance compensation and background processing. Meanwhile, the over-scan mode is not used but only under-scan mode is used since the image includes the background region 2617.

Meanwhile, the operation method of the image display apparatus according to the present invention may be realized as code, which is readable by a processor included in the image display apparatus, in recording media readable by the processor. The recording media readable by the processor includes all kinds of recording devices to store data which are readable by the processor. Examples of the recording media readable by the processor may include a read only memory (ROM), a random access memory (RAM), a compact disc read only memory (CD-ROM), a magnetic tape, a floppy disk, and an optical data storage device. In addition, the recording media readable by the processor may also be realized in the form of a carrier wave, such as transmission through the Internet. Furthermore, the recording media readable by the processor may be distributed to computer systems connected to each other through a network such that a code readable by the processor is stored or executed in a distribution mode.

As is apparent from the above description, according to the embodiments of the present invention, the image display apparatus performs nonlinear scaling for a received image using a nonlinear scaling factor corresponding to a user's viewing angle in a curved display mode. Consequently, it is possible to nonlinearly change the size or position of pixels in a screen, thereby providing a curved effect. In particular, the curved effect may be provided even on a flat panel display.

An immersion effect may be provided in a concave mode of a curved display mode and a cubic effect may be provided in a convex mode of the curved display mode. Consequently, it is possible to provide various image viewing effects.

Nonlinear scaling may be performed in consideration of even the distance between a user and the display with the result that the user may further feel the curved effect.

On the other hand, luminance of pixels in an image may be nonlinearly changed during nonlinear scaling. As a result, the immersion effect or the cubic effect may be further improved.

In addition, it is possible to select any one from between an under-scan mode and an over-scan mode of the concave mode or the convex mode based on a user input, thereby improving user convenience.

Although the preferred embodiments of the present invention have been disclosed for illustrative purposes, those skilled in the art will appreciate that various modifications, additions and substitutions are possible, without departing from the scope of the invention as disclosed in the accompanying claims.

**Claims**

1. An image display apparatus comprising:

   a nonlinear scaling controller (2100) to output a nonlinear scaling factor corresponding to a user's viewing angle in a curved display mode;

an image processing unit (325) to perform nonlinear scaling for a received image using the nonlinear scaling factor; and

a display (180) to display the nonlinearly scaled image.

2. The image display apparatus according to claim 1, wherein the nonlinear scaling factor comprises a vertical conversion ratio and a horizontal conversion ratio for the nonlinear scaling.

3. The image display apparatus according to claim 2, wherein the image processing unit (325) performs the nonlinear scaling for pixels arranged in a vertical direction using the vertical conversion ratio and performs the nonlinear scaling for pixels arranged in a horizontal direction using the horizontal conversion ratio.

4. The image display apparatus according to one of the preceding claims, wherein the image processing unit (325) nonlinearly changes at least one selected from size and position of pixels in the received image during the nonlinear scaling.

5. The image display apparatus according to claim 4, wherein the image processing unit (325) nonlinearly changes luminance of the pixels in the received image during the nonlinear scaling.

6. The image display apparatus according to one of the preceding claims, wherein the image processing unit (325) controls at least one selected from size and luminance of pixels in the received image to be increased in proportion to increase of the user's viewing angle in a concave mode of the curved display mode.

7. The image display apparatus according to claim 6, wherein
the image processing unit (325) performs nonlinear scaling such that the nonlinearly scaled image comprises a concave image region and a non-signal region in an under-scan mode of the concave mode, and
the image processing unit (325) performs nonlinear scaling such that the nonlinearly scaled image comprises only a concave image region in an over-scan mode of the concave mode.

8. The image display apparatus according to one of the preceding claims, wherein the image processing unit (325) controls at least one selected from size and luminance of pixels in the received image to be decreased in inverse proportion to increase of the user's viewing angle in a convex mode of the curved display mode.

9. The image display apparatus according to claim 8, wherein
the image processing unit (325) performs nonlinear scaling such that the nonlinearly scaled image comprises a convex image region and a non-signal region in an under-scan mode of the convex mode, and
the image processing unit (325) performs nonlinear scaling such that the nonlinearly scaled image comprises only a convex image region in an over-scan mode of the convex mode.

10. The image display apparatus according to one of the preceding claims, wherein the nonlinear scaling factor outputted by the nonlinear scaling controller (2100) further comprises the nonlinear scaling factor corresponding to the user's viewing angle and a distance between the user and the display.

11. The image display apparatus according to claim 10, wherein the image processing unit (325) nonlinearly changes at least one selected from size and position of pixels in the received image using the nonlinear scaling factor to control the at least one selected from the size and position of the pixels in the received image to be increased in proportion to increase of a distance between the user and the display.

12. The image display apparatus according to one of the preceding claims, further comprising:

an interface unit (150) to receive a remote control signal from a remote controller, wherein
in a case in which the display (180) displays a concave mode item and a convex mode item in the curved display mode, the remote control signal indicates a selection between the concave mode item and the convex mode item.

13. The image display apparatus according to one of the preceding claims, further comprising:

a camera unit (195) to capture an image of the user, wherein
the user's viewing angle is calculated based on the user's image captured by the camera unit.

EP 2 930 685 A2

**14.** The image display apparatus according to one of claims 1 to 11, further comprising:

an interface unit (150) to receive a user input, wherein the user's viewing angle is set by the user input.

**15.** An operation method of an image display apparatus comprising:

Receiving (S810), by an image processing unit, an image;
Receiving (S820), by the image processing unit, information regarding a user's viewing angle;
Performing (S830), by the image processing unit, nonlinear scaling for the received image based on the user's viewing angle; and
Displaying (S840), by a display, the nonlinearly scaled image.

## FIG. 1

## FIG. 2

FIG. 3

FIG. 4

(a)                          (b)                          (c)

FIG. 5

150

415

COORDINATE VALUE
CALCULATOR

411

412          413

RF MODULE      IR MODULE

200

420

421

RF MODULE

423

470          IR MODULE

MEMORY

460          480          430

POWER SUPPLY
UNIT          CONTROLLER          USER INPUT UNIT

450          440

451          441

LED MODULE      GYRO SENSOR

453          443

VIBRATION
MODULE          ACCELERATION
SENSOR

455

SOUND OUTPUT
MODULE

457

DISPLAY
MODULE

## FIG. 6

(a)                    (b)

## FIG. 7

(a)                    (b)

FIG. 8

```
        START

   RECEIVE IMAGE                    ~S810

   RECEIVE INFORMATION REGARDING    ~S820
   USER'S VIEWING ANGLE

   PERFORM NONLINEAR SCALING FOR
   RECEIVED IMAGE BASED ON          ~S830
   INFORMATION REGARDING USER'S
   VIEWING ANGLE

   DISPLAY NONLINEARLY SCALED IMAGE ~S840

        END
```

FIG. 9a

FIG. 9b

910

a0   a0

b0

b0

925

FIG. 10a

FIG. 10b

910

1025

FIG. 11

VIEWING ANGLE (AZIMUTH ANGLE)

FIG. 12

## FIG. 13

| Vert. screen position (%) | Horizontal screen position (%) | | | | | | | | | | | | | | | | | | | | |
|---|---|---|---|---|---|---|---|---|---|---|---|---|---|---|---|---|---|---|---|---|---|
| | 0 | 5 | 10 | 15 | 20 | 25 | 30 | 35 | 40 | 45 | 50 | 55 | 60 | 65 | 70 | 75 | 80 | 85 | 90 | 95 | 100 |
| 0 | 18.78 | 17.46 | 16.16 | 14.90 | 13.70 | 12.57 | 11.56 | 10.70 | 10.03 | 9.61 | 9.46 | 9.61 | 10.03 | 10.70 | 11.56 | 12.57 | 13.70 | 14.90 | 16.16 | 17.46 | 18.78 |
| 5 | 18.37 | 17.01 | 15.67 | 14.36 | 13.09 | 11.91 | 10.82 | 9.89 | 9.16 | 8.69 | 8.53 | 8.69 | 9.16 | 9.89 | 10.82 | 11.91 | 13.09 | 14.36 | 15.67 | 17.01 | 18.37 |
| 10 | 18.00 | 16.60 | 15.21 | 13.85 | 12.53 | 11.27 | 10.11 | 9.10 | 8.30 | 7.78 | 7.59 | 7.78 | 8.30 | 9.10 | 10.11 | 11.27 | 12.53 | 13.85 | 15.21 | 16.60 | 18.00 |
| 15 | 17.66 | 16.23 | 14.80 | 13.39 | 12.00 | 10.68 | 9.44 | 8.34 | 7.46 | 6.86 | 6.65 | 6.86 | 7.46 | 8.34 | 9.44 | 10.68 | 12.00 | 13.39 | 14.80 | 16.23 | 17.66 |
| 20 | 17.37 | 15.90 | 14.43 | 12.97 | 11.53 | 10.13 | 8.81 | 7.62 | 6.63 | 5.95 | 5.71 | 5.95 | 6.63 | 7.62 | 8.81 | 10.13 | 11.53 | 12.97 | 14.43 | 15.90 | 17.37 |
| 25 | 17.11 | 15.61 | 14.10 | 12.60 | 11.11 | 9.65 | 8.24 | 6.95 | 5.84 | 5.05 | 4.76 | 5.05 | 5.84 | 6.95 | 8.24 | 9.65 | 11.11 | 12.60 | 14.10 | 15.61 | 17.11 |
| 30 | 16.89 | 15.37 | 13.83 | 12.29 | 10.75 | 9.23 | 7.74 | 6.34 | 5.10 | 4.17 | 3.81 | 4.17 | 5.10 | 6.34 | 7.74 | 9.23 | 10.75 | 12.29 | 13.83 | 15.37 | 16.89 |
| 35 | 16.72 | 15.18 | 13.62 | 12.04 | 10.45 | 8.89 | 7.33 | 5.82 | 4.43 | 3.33 | 2.86 | 3.33 | 4.43 | 5.82 | 7.33 | 8.89 | 10.46 | 12.04 | 13.62 | 15.18 | 16.72 |
| 40 | 16.60 | 15.04 | 13.46 | 11.86 | 10.25 | 8.63 | 7.02 | 5.42 | 3.89 | 2.55 | 1.91 | 2.55 | 3.89 | 5.42 | 7.02 | 8.63 | 10.25 | 11.86 | 13.46 | 15.04 | 16.60 |
| 45 | 16.53 | 14.96 | 13.37 | 11.75 | 10.12 | 8.48 | 6.82 | 5.17 | 3.52 | 1.95 | 0.95 | 1.95 | 3.52 | 5.17 | 6.82 | 8.48 | 10.12 | 11.75 | 13.37 | 14.96 | 16.53 |
| 50 | 16.50 | 14.93 | 13.34 | 11.72 | 10.08 | 8.43 | 6.76 | 5.08 | 3.39 | 1.70 | 0.00 | 1.70 | 3.39 | 5.08 | 6.76 | 8.43 | 10.08 | 11.72 | 13.34 | 14.93 | 16.50 |
| 55 | 16.53 | 14.96 | 13.37 | 11.75 | 10.12 | 8.48 | 6.82 | 5.17 | 3.52 | 1.95 | 0.95 | 1.95 | 3.52 | 5.17 | 6.82 | 8.48 | 10.12 | 11.75 | 13.37 | 14.96 | 16.53 |
| 60 | 16.60 | 15.04 | 13.46 | 11.86 | 10.25 | 8.63 | 7.02 | 5.42 | 3.89 | 2.55 | 1.91 | 2.55 | 3.89 | 5.42 | 7.02 | 8.63 | 10.25 | 11.86 | 13.46 | 15.04 | 16.60 |
| 65 | 16.72 | 15.18 | 13.62 | 12.04 | 10.45 | 8.89 | 7.33 | 5.82 | 4.43 | 3.33 | 2.86 | 3.33 | 4.43 | 5.82 | 7.33 | 8.89 | 10.46 | 12.04 | 13.62 | 15.18 | 16.72 |
| 70 | 16.89 | 15.37 | 13.83 | 12.29 | 10.75 | 9.23 | 7.74 | 6.34 | 5.10 | 4.17 | 3.81 | 4.17 | 5.10 | 6.34 | 7.74 | 9.23 | 10.75 | 12.29 | 13.83 | 15.37 | 16.89 |
| 75 | 17.11 | 15.61 | 14.10 | 12.60 | 11.11 | 9.65 | 8.24 | 6.95 | 5.84 | 5.05 | 4.76 | 5.05 | 5.84 | 6.95 | 8.24 | 9.65 | 11.11 | 12.60 | 14.10 | 15.61 | 17.11 |
| 80 | 17.37 | 15.90 | 14.43 | 12.97 | 11.53 | 10.13 | 8.81 | 7.62 | 6.63 | 5.95 | 5.71 | 5.95 | 6.63 | 7.62 | 8.81 | 10.13 | 11.53 | 12.97 | 14.43 | 15.90 | 17.37 |
| 85 | 17.66 | 16.23 | 14.80 | 13.39 | 12.00 | 10.68 | 9.44 | 8.34 | 7.46 | 6.86 | 6.65 | 6.86 | 7.46 | 8.34 | 9.44 | 10.68 | 12.00 | 13.39 | 14.80 | 16.23 | 17.66 |
| 90 | 18.00 | 16.60 | 15.21 | 13.85 | 12.53 | 11.27 | 10.11 | 9.10 | 8.30 | 7.78 | 7.59 | 7.78 | 8.30 | 9.10 | 10.11 | 11.27 | 12.53 | 13.85 | 15.21 | 16.60 | 18.00 |
| 95 | 18.37 | 17.01 | 15.67 | 14.36 | 13.09 | 11.91 | 10.82 | 9.89 | 9.16 | 8.69 | 8.53 | 8.69 | 9.16 | 9.89 | 10.82 | 11.91 | 13.09 | 14.36 | 15.67 | 17.01 | 18.37 |
| 100 | 18.78 | 17.46 | 16.16 | 14.90 | 13.70 | 12.57 | 11.56 | 10.70 | 10.03 | 9.61 | 9.46 | 9.61 | 10.03 | 10.70 | 11.56 | 12.57 | 13.70 | 14.90 | 16.16 | 17.46 | 18.78 |

## FIG. 14

| Vert. screen position (%) | Horizontal screen position (%) | | | | | | | | | | | | | | | | | | | | |
|---|---|---|---|---|---|---|---|---|---|---|---|---|---|---|---|---|---|---|---|---|---|
| | 0 | 5 | 10 | 15 | 20 | 25 | 30 | 35 | 40 | 45 | 50 | 55 | 60 | 65 | 70 | 75 | 80 | 85 | 90 | 95 | 100 |
| 0 | 1.000 | 0.992 | 0.986 | 0.980 | 0.974 | 0.970 | 0.966 | 0.964 | 0.961 | 0.960 | 0.960 | 0.960 | 0.961 | 0.964 | 0.966 | 0.970 | 0.974 | 0.980 | 0.986 | 0.992 | 1.000 |
| 5 | 0.998 | 0.990 | 0.983 | 0.977 | 0.972 | 0.968 | 0.964 | 0.961 | 0.959 | 0.958 | 0.957 | 0.958 | 0.959 | 0.961 | 0.964 | 0.968 | 0.972 | 0.977 | 0.983 | 0.990 | 0.998 |
| 10 | 0.996 | 0.988 | 0.981 | 0.975 | 0.970 | 0.965 | 0.962 | 0.959 | 0.957 | 0.956 | 0.955 | 0.956 | 0.957 | 0.959 | 0.962 | 0.965 | 0.970 | 0.975 | 0.981 | 0.988 | 0.996 |
| 15 | 0.994 | 0.986 | 0.979 | 0.973 | 0.968 | 0.963 | 0.960 | 0.957 | 0.955 | 0.954 | 0.953 | 0.954 | 0.955 | 0.957 | 0.960 | 0.963 | 0.968 | 0.973 | 0.979 | 0.986 | 0.994 |
| 20 | 0.992 | 0.984 | 0.978 | 0.972 | 0.966 | 0.962 | 0.958 | 0.955 | 0.953 | 0.952 | 0.952 | 0.952 | 0.953 | 0.955 | 0.958 | 0.962 | 0.966 | 0.972 | 0.978 | 0.984 | 0.992 |
| 25 | 0.991 | 0.983 | 0.976 | 0.970 | 0.965 | 0.960 | 0.957 | 0.954 | 0.952 | 0.950 | 0.950 | 0.950 | 0.952 | 0.954 | 0.957 | 0.960 | 0.965 | 0.970 | 0.976 | 0.983 | 0.991 |
| 30 | 0.989 | 0.982 | 0.975 | 0.969 | 0.964 | 0.959 | 0.955 | 0.953 | 0.951 | 0.949 | 0.949 | 0.949 | 0.951 | 0.953 | 0.955 | 0.959 | 0.964 | 0.969 | 0.975 | 0.982 | 0.989 |
| 35 | 0.989 | 0.981 | 0.974 | 0.968 | 0.963 | 0.958 | 0.955 | 0.952 | 0.950 | 0.948 | 0.948 | 0.948 | 0.950 | 0.952 | 0.955 | 0.958 | 0.963 | 0.968 | 0.974 | 0.981 | 0.989 |
| 40 | 0.988 | 0.980 | 0.974 | 0.967 | 0.962 | 0.958 | 0.954 | 0.951 | 0.949 | 0.948 | 0.947 | 0.948 | 0.949 | 0.951 | 0.954 | 0.958 | 0.962 | 0.967 | 0.974 | 0.980 | 0.988 |
| 45 | 0.988 | 0.980 | 0.973 | 0.967 | 0.962 | 0.957 | 0.954 | 0.951 | 0.949 | 0.947 | 0.947 | 0.947 | 0.949 | 0.951 | 0.954 | 0.957 | 0.962 | 0.967 | 0.973 | 0.980 | 0.988 |
| 50 | 0.987 | 0.980 | 0.973 | 0.967 | 0.962 | 0.957 | 0.953 | 0.951 | 0.948 | 0.947 | 0.947 | 0.947 | 0.948 | 0.951 | 0.953 | 0.957 | 0.962 | 0.967 | 0.973 | 0.980 | 0.987 |
| 55 | 0.988 | 0.980 | 0.973 | 0.967 | 0.962 | 0.957 | 0.954 | 0.951 | 0.949 | 0.947 | 0.947 | 0.947 | 0.949 | 0.951 | 0.954 | 0.957 | 0.962 | 0.967 | 0.973 | 0.980 | 0.988 |
| 60 | 0.988 | 0.980 | 0.974 | 0.967 | 0.962 | 0.958 | 0.954 | 0.951 | 0.949 | 0.948 | 0.947 | 0.948 | 0.949 | 0.951 | 0.954 | 0.958 | 0.962 | 0.967 | 0.974 | 0.980 | 0.988 |
| 65 | 0.989 | 0.981 | 0.974 | 0.968 | 0.963 | 0.958 | 0.955 | 0.952 | 0.950 | 0.948 | 0.948 | 0.948 | 0.950 | 0.952 | 0.955 | 0.958 | 0.963 | 0.968 | 0.974 | 0.981 | 0.989 |
| 70 | 0.989 | 0.982 | 0.975 | 0.969 | 0.964 | 0.959 | 0.955 | 0.953 | 0.951 | 0.949 | 0.949 | 0.949 | 0.951 | 0.953 | 0.955 | 0.959 | 0.964 | 0.969 | 0.975 | 0.982 | 0.989 |
| 75 | 0.991 | 0.983 | 0.976 | 0.970 | 0.965 | 0.960 | 0.957 | 0.954 | 0.952 | 0.950 | 0.950 | 0.950 | 0.952 | 0.954 | 0.957 | 0.960 | 0.965 | 0.970 | 0.976 | 0.983 | 0.991 |
| 80 | 0.992 | 0.984 | 0.978 | 0.972 | 0.966 | 0.962 | 0.958 | 0.955 | 0.953 | 0.952 | 0.952 | 0.952 | 0.953 | 0.955 | 0.958 | 0.962 | 0.966 | 0.972 | 0.978 | 0.984 | 0.992 |
| 85 | 0.994 | 0.986 | 0.979 | 0.973 | 0.968 | 0.963 | 0.960 | 0.957 | 0.955 | 0.954 | 0.953 | 0.954 | 0.955 | 0.957 | 0.960 | 0.963 | 0.968 | 0.973 | 0.979 | 0.986 | 0.994 |
| 90 | 0.996 | 0.988 | 0.981 | 0.975 | 0.970 | 0.965 | 0.962 | 0.959 | 0.957 | 0.956 | 0.955 | 0.956 | 0.957 | 0.959 | 0.962 | 0.965 | 0.970 | 0.975 | 0.981 | 0.988 | 0.996 |
| 95 | 0.998 | 0.990 | 0.983 | 0.977 | 0.972 | 0.968 | 0.964 | 0.961 | 0.959 | 0.958 | 0.957 | 0.958 | 0.959 | 0.961 | 0.964 | 0.968 | 0.972 | 0.977 | 0.983 | 0.990 | 0.998 |
| 100 | 1.000 | 0.992 | 0.986 | 0.980 | 0.974 | 0.970 | 0.966 | 0.964 | 0.961 | 0.960 | 0.960 | 0.960 | 0.961 | 0.964 | 0.966 | 0.970 | 0.974 | 0.980 | 0.986 | 0.992 | 1.000 |

FIG. 15

| Vert. screen position (%) | Horizontal screen position (%) | | | | | | | | | | | | | | | | | | | | |
|---|---|---|---|---|---|---|---|---|---|---|---|---|---|---|---|---|---|---|---|---|---|
| | 0 | 5 | 10 | 15 | 20 | 25 | 30 | 35 | 40 | 45 | 50 | 55 | 60 | 65 | 70 | 75 | 80 | 85 | 90 | 95 | 100 |
| 0 | 1.056 | 1.048 | 1.041 | 1.035 | 1.029 | 1.025 | 1.021 | 1.018 | 1.016 | 1.014 | 1.014 | 1.014 | 1.016 | 1.018 | 1.021 | 1.025 | 1.029 | 1.035 | 1.041 | 1.048 | 1.056 |
| 5 | 1.054 | 1.046 | 1.039 | 1.032 | 1.027 | 1.022 | 1.018 | 1.015 | 1.013 | 1.012 | 1.011 | 1.012 | 1.013 | 1.015 | 1.015 | 1.022 | 1.027 | 1.032 | 1.039 | 1.046 | 1.054 |
| 10 | 1.051 | 1.043 | 1.036 | 1.030 | 1.024 | 1.020 | 1.016 | 1.013 | 1.011 | 1.009 | 1.009 | 1.009 | 1.011 | 1.013 | 1.016 | 1.020 | 1.024 | 1.030 | 1.036 | 1.043 | 1.051 |
| 15 | 1.049 | 1.041 | 1.034 | 1.028 | 1.022 | 1.018 | 1.014 | 1.011 | 1.009 | 1.007 | 1.007 | 1.007 | 1.009 | 1.011 | 1.014 | 1.018 | 1.022 | 1.028 | 1.034 | 1.041 | 1.049 |
| 20 | 1.048 | 1.040 | 1.033 | 1.026 | 1.021 | 1.016 | 1.012 | 1.009 | 1.007 | 1.005 | 1.005 | 1.005 | 1.007 | 1.009 | 1.012 | 1.016 | 1.021 | 1.026 | 1.033 | 1.040 | 1.048 |
| 25 | 1.046 | 1.038 | 1.031 | 1.025 | 1.019 | 1.014 | 1.010 | 1.007 | 1.005 | 1.004 | 1.003 | 1.004 | 1.005 | 1.007 | 1.010 | 1.014 | 1.019 | 1.025 | 1.031 | 1.038 | 1.046 |
| 30 | 1.045 | 1.037 | 1.030 | 1.023 | 1.018 | 1.013 | 1.009 | 1.006 | 1.004 | 1.003 | 1.002 | 1.003 | 1.004 | 1.006 | 1.009 | 1.013 | 1.018 | 1.023 | 1.030 | 1.037 | 1.045 |
| 35 | 1.044 | 1.036 | 1.029 | 1.023 | 1.017 | 1.012 | 1.008 | 1.005 | 1.003 | 1.002 | 1.001 | 1.002 | 1.003 | 1.005 | 1.008 | 1.012 | 1.017 | 1.023 | 1.029 | 1.036 | 1.044 |
| 40 | 1.044 | 1.035 | 1.028 | 1.022 | 1.016 | 1.011 | 1.008 | 1.004 | 1.002 | 1.001 | 1.001 | 1.001 | 1.002 | 1.004 | 1.008 | 1.011 | 1.016 | 1.022 | 1.028 | 1.035 | 1.044 |
| 45 | 1.043 | 1.035 | 1.028 | 1.021 | 1.016 | 1.011 | 1.007 | 1.004 | 1.002 | 1.001 | 1.000 | 1.001 | 1.002 | 1.004 | 1.007 | 1.011 | 1.016 | 1.021 | 1.028 | 1.035 | 1.043 |
| 50 | 1.043 | 1.035 | 1.028 | 1.021 | 1.016 | 1.011 | 1.007 | 1.004 | 1.002 | 1.000 | 1.000 | 1.000 | 1.002 | 1.004 | 1.007 | 1.011 | 1.016 | 1.021 | 1.028 | 1.035 | 1.043 |
| 55 | 1.043 | 1.035 | 1.028 | 1.021 | 1.016 | 1.011 | 1.007 | 1.004 | 1.002 | 1.001 | 1.000 | 1.001 | 1.002 | 1.004 | 1.007 | 1.011 | 1.016 | 1.021 | 1.028 | 1.035 | 1.043 |
| 60 | 1.044 | 1.035 | 1.028 | 1.022 | 1.016 | 1.011 | 1.008 | 1.004 | 1.002 | 1.001 | 1.001 | 1.001 | 1.002 | 1.004 | 1.008 | 1.011 | 1.016 | 1.022 | 1.028 | 1.035 | 1.044 |
| 65 | 1.044 | 1.036 | 1.029 | 1.023 | 1.017 | 1.012 | 1.008 | 1.005 | 1.003 | 1.002 | 1.001 | 1.002 | 1.003 | 1.005 | 1.008 | 1.012 | 1.017 | 1.023 | 1.029 | 1.036 | 1.044 |
| 70 | 1.045 | 1.037 | 1.030 | 1.023 | 1.018 | 1.013 | 1.009 | 1.006 | 1.004 | 1.003 | 1.002 | 1.003 | 1.004 | 1.006 | 1.009 | 1.013 | 1.018 | 1.023 | 1.030 | 1.037 | 1.045 |
| 75 | 1.046 | 1.038 | 1.031 | 1.025 | 1.019 | 1.014 | 1.010 | 1.007 | 1.005 | 1.004 | 1.003 | 1.004 | 1.005 | 1.007 | 1.010 | 1.014 | 1.019 | 1.025 | 1.031 | 1.038 | 1.046 |
| 80 | 1.048 | 1.040 | 1.033 | 1.026 | 1.021 | 1.016 | 1.012 | 1.009 | 1.007 | 1.005 | 1.005 | 1.005 | 1.007 | 1.009 | 1.012 | 1.016 | 1.021 | 1.026 | 1.033 | 1.040 | 1.048 |
| 85 | 1.049 | 1.041 | 1.034 | 1.028 | 1.022 | 1.018 | 1.014 | 1.011 | 1.009 | 1.007 | 1.007 | 1.007 | 1.009 | 1.011 | 1.014 | 1.018 | 1.022 | 1.028 | 1.034 | 1.041 | 1.049 |
| 90 | 1.051 | 1.043 | 1.036 | 1.030 | 1.024 | 1.020 | 1.016 | 1.013 | 1.011 | 1.009 | 1.009 | 1.009 | 1.011 | 1.013 | 1.016 | 1.020 | 1.024 | 1.030 | 1.036 | 1.043 | 1.051 |
| 95 | 1.054 | 1.046 | 1.039 | 1.032 | 1.027 | 1.022 | 1.018 | 1.015 | 1.013 | 1.012 | 1.011 | 1.012 | 1.013 | 1.015 | 1.015 | 1.022 | 1.027 | 1.032 | 1.039 | 1.046 | 1.054 |
| 100 | 1.056 | 1.048 | 1.041 | 1.035 | 1.029 | 1.025 | 1.021 | 1.018 | 1.016 | 1.014 | 1.014 | 1.014 | 1.016 | 1.018 | 1.021 | 1.025 | 1.029 | 1.035 | 1.041 | 1.048 | 1.056 |

FIG. 16

FIG. 17

FIG. 18

EP 2 930 685 A2

FIG. 19

HORIZONTAL SCREEN POSITION

FIG. 20

FIG.21

FIG. 22a

## FIG. 22b

CURVED DISPLAY MODE

CONCAVE MODE

CONVEX MODE

# FIG. 22c

CONCAVE MODE

UNDER-SCAN

OVER-SCAN

**FIG. 22d**

**FIG. 23a**

USER LOCATION SETTING

FIG. 23b

FIG. 23c

FIG. 23d

## FIG. 23e

## FIG. 24a

FIG. 24b

## FIG. 25a

## FIG. 25b

FIG. 26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020140041390